# EUROPEAN PATENT APPLICATION

(11) **EP 4 439 693 A1**
(43) Date of publication of application: **02.10.2024**
(21) Application number: 24166085.1
(22) Date of filing: 25.03.2024
(51) Int. Cl.: H01M 4/04, H01M 4/131, H01M 4/1391, H01M 4/62, H01M 10/0525, H01M 4/505, H01M 4/525, H01M 4/02

(54) **METHOD OF PREPARING DRY ELECTRODE FILM, DRY ELECTRODE FILM, DRY ELECTRODE INCLUDING THE DRY ELECTRODE FILM, AND LITHIUM BATTERY INCLUDING THE DRY ELECTRODE FILM**

(30) Priority: 26.03.2023 KR 20230039366; 14.04.2023 KR 20230049399
(71) Applicant: Samsung SDI Co., Ltd., Yongin-si, Gyeonggi-do 17084 (KR)
(72) Inventor: NAM, Hyun, 17084 Yongin-si (KR); LEE, Jinhyon, 17084 Yongin-si (KR); PYUN, Ahram, 17084 Yongin-si (KR); KWON, Ilkyong, 17084 Yongin-si (KR); YOON, Yeonhee, 17084 Yongin-si (KR); LEE, Donggeun, 17084 Yongin-si (KR); KIM, Seongdae, 17084 Yongin-si (KR); KWON, Seunguk, 17084 Yongin-si (KR); BANG, Youmin, 17084 Yongin-si (KR); CHOI, Jongsup, 17084 Yongin-si (KR)
(74) Representative: Marks & Clerk LLP

(57) **Abstract**

A method of preparing a dry electrode film, the dry electrode film, a dry electrode including the dry electrode film, and a lithium battery including the dry electrode film are provided. The method includes providing frozen first dry binder particles, pulverizing the frozen first dry binder particles to prepare second dry binder particles, mixing a dry electrode active material and the second dry binder particles to prepare a dry electrode mixture, and processing the dry electrode mixture into a dry electrode film including a dry binder through a rolling device including a calender roll. A second particle diameter of the second dry binder particles is less than a first particle diameter of the frozen first dry binder particles.

## Description

### BACKGROUND

### 1. Field

According to one or more embodiments, the present disclosure relates to a method of preparing a dry electrode film, a dry electrode film, a dry electrode including the dry electrode film, and a lithium battery including the dry electrode film.

### 2. Description of Related Art

In order to achieve miniaturization and relatively high performance of one or more suitable devices, in addition to miniaturization and weight reduction of lithium batteries, it is becoming important to have a relatively high energy density (or battery energy density). For example, a lithium battery with a relatively high capacity is becoming important.

In electrodes prepared from a slurry including a solvent, an excessive amount of an organic solvent is utilized in preparing the electrode. Therefore, it is desirable to provide a dry method of or for preparing a relatively high capacity lithium battery by eliminating the utilization of the organic solvent.

### SUMMARY

One or more aspects are directed toward a method of preparing a dry electrode, which is capable of introducing one or more suitable types (kinds) of electrode active material layers onto an electrode current collector without damaging the electrode current collector.

One or more aspects include a method of preparing a dry electrode, which is capable of easily adjusting a position of an electrode active material layer introduced onto an electrode current collector.

One or more aspects include a method of preparing a dry electrode, which is capable of easily preventing or reducing detachment of an electrode active material layer from an electrode current collector.

Additional aspects will be set forth in part in the description which follows and, in part, will be apparent from the description, or may be learned by practice of the presented embodiments of the disclosure.

According to one or more embodiments,
a method of preparing a dry electrode film includes
providing frozen first dry binder particles,
pulverizing the frozen first dry binder particles to prepare second dry binder particles,
mixing a dry electrode active material and the second dry binder particles to prepare a dry electrode mixture, and
processing the dry electrode mixture into a dry electrode film including a dry binder through a rolling device including a calender roll,
wherein a second particle diameter of the second dry binder particles is less than a first particle diameter of the frozen first dry binder particles.

According to one or more embodiments,
provided is a dry electrode film prepared through the method of preparing a dry electrode film,
wherein the dry electrode film is prepared utilizing the second dry binder particles obtained by pulverizing the frozen first dry binder particles,
in an XRD spectrum of the second dry binder particles, a degree of crystallinity, which is a ratio of an area of a (100) crystalline peak at a diffraction angle (2θ) of about 18°±1.5° to a total peak area at a diffraction angle (2θ) of about 13.5° to about 20°, is in a range of about 50 % to about 90 %,
a binder content (e.g., amount) of the dry electrode film is in a range of about 0.1 wt% to about 2 wt% of a total weight of the dry electrode film,
elongation at break of the dry electrode film is 14 % or more, and
the dry electrode film is a self-standing film.
According to one or more embodiments,
provided is a dry electrode film including a dry electrode active material and a dry binder,
wherein a binder content (e.g., amount) of the dry electrode film is in a range of about 0.1 wt% to about 2 wt% of a total weight of the dry electrode film,
elongation at break of the dry electrode film is 14 % or more, and
the dry electrode film is a self-standing film.

According to one or more embodiments,
provided is a dry binder particle,
wherein, in an XRD spectrum of the second dry binder particles, a degree of crystallinity, which is a ratio of an area of a (100) crystalline peak at a diffraction angle (2θ) of about 18°±1.5° to a total peak area at a diffraction angle (2θ) of about 13.5° to about 20°, is in a range of about 50 % to about 90 %.

According to one or more embodiments,
a dry electrode film includes a dry electrode active material and a dry binder,
wherein, in an XRD spectrum of the second dry binder particles, a degree of crystallinity, which is a ratio of an area of a (100) crystalline peak at a diffraction angle (2θ) of about 18°±1.5° to a total peak area at a diffraction angle (2θ) of about 13.5° to about 20°, is in a range of about 50 % to about 90 %,
a content (e.g., amount) of the dry binder of the dry electrode film is in a range of about 0.1 wt% to about 2 wt% of a total weight of the dry electrode film,
elongation at break of the dry electrode film is 14 % or more, and
the dry electrode film is a self-standing film.

According to one or more embodiments,
a dry electrode includes an electrode current collector, and
the dry electrode film provided on at least one surface of the electrode current collector.

According to one or more embodiments,
a lithium battery includes a first electrode, a second electrode, and an electrolyte provided between the first electrode and the second electrode,
wherein the first electrode, the second electrode, or a combination thereof is the dry electrode, and
the electrolyte includes a liquid electrolyte, a solid electrolyte, or a combination thereof.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a scanning electron microscope image of first dry binder particles utilized in Comparative Example 1;
FIG. 2 is an enlarged view of FIG. 1;
FIG. 3 is a scanning electron microscope image of second dry binder particles prepared in Example 1 according to one or more embodiments of the present disclosure;
FIG. 4 is an enlarged view of FIG. 3;
FIG. 5 is a scanning electron microscope image of a cross section of a dry positive electrode film including a dry binder prepared in Example 1 and fibrillized in a machine direction (X direction) according to one or more embodiments of the present disclosure;
FIG. 6 is a schematic view illustrating a method of preparing a dry electrode film according to one or more embodiments of the present disclosure;
FIGS. 7A and 7B are cross-sectional views of dry electrodes according to one or more embodiments of the present disclosure;
FIG. 8 is a schematic view of a dry electrode according to one or more embodiments of the present disclosure;
FIGS. 9A to 9F are plan views of dry electrodes according to one or more embodiments of the present disclosure;
FIG. 10 is a cross-sectional view of a dry electrode according to one or more embodiments of the present disclosure;
FIG. 11 is a side view of an electrode assembly according to one or more embodiments of the present disclosure;
FIG. 12 is a side view of an electrode assembly according to one or more embodiments of the present disclosure;
FIG. 13 is a front view of an electrode assembly according to one or more embodiments of the present disclosure;
FIG. 14 is a schematic view of a lithium battery according to one or more embodiments of the present disclosure;
FIG. 15 is a schematic view of a lithium battery according to one or more embodiments of the present disclosure; and
FIG. 16 is a schematic view of a lithium battery according to one or more embodiments of the present disclosure.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

Hereinafter, as the present disclosure allows for one or more suitable changes and numerous embodiments, specific embodiments will be illustrated in the drawings and described in more detail in the written description. However, this is not intended to limit the present disclosure to particular modes of practice, and it is to be appreciated that all changes, equivalents, and substitutes that do not depart from the technical scope are encompassed in the present disclosure.

The terms utilized herein are merely utilized to describe specific embodiments and are not intended to limit the present disclosure. An expression utilized in the singular encompasses the expression of the plural, unless it has a clearly different meaning in the context. Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, etc. may be used herein to describe various elements, these elements should not be limited by these terms. These terms are only used to distinguish one element from another element. Thus, a first element could be termed a second element without departing from the teachings of the present disclosure. Similarly, a second element could be termed a first element.

As utilized herein, it is to be understood that the terms such as "including," "includes," "include," "having," "has," "have," "comprises," "comprise," and/or "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" utilized herein may be interpreted as "and" or "or" according to the context. The term "combination thereof may include a mixture, a laminate, a complex, a copolymer, an alloy, a blend, a reactant of constituents.

As used herein, singular forms such as "a," "an," and "the" are intended to include the plural forms as well, unless the context clearly indicates otherwise.

As used herein, the terms "use," "using," and "used" may be considered synonymous with the terms "utilize," "utilizing," and "utilized," respectively.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In the drawings, the thicknesses of layers and regions are exaggerated or reduced for clarity. Like reference numerals in the drawings denote like elements throughout, and duplicative descriptions thereof may not be provided the specification. Throughout the specification, it will be understood that if (e.g., when) a component, such as a layer, a film, a region, or a plate, is referred to as being "on" another component, the component may be directly on the other component or intervening components may be present thereon. Throughout the specification, while terms such as "first," "second," and/or the like may be utilized to describe one or more suitable components, such components should not be limited to the above terms. The above terms are utilized only to distinguish one component from another. Components having substantially the same functional configuration in the present specification and drawings are denoted by the same reference numerals, and redundant descriptions thereof will not be provided.

Spatially relative terms, such as "beneath," "below," "lower," "above," "upper," "bottom," "top," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

As utilized herein, the term "dry" refers to a state of not being intentionally in contact with a solvent such as a process solvent or a state of not intentionally including a solvent. For example, a dry conductive material refers to a conductive material that is not intentionally in contact with a solvent or a conductive material that does not intentionally include a solvent. For example, a dry binder refers to a binder that is not intentionally in contact with a solvent or a binder that does not intentionally include a solvent. For example, a binder in a liquid state at room temperature without being mixed with a solvent is a dry binder.

As utilized herein, the term "particle diameter" of particles refers to an average diameter if (e.g., when) particles are spherical and refers to an average major axis length if (e.g., when) particles are non-spherical. A particle diameter of particles may be measured utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50 % cumulative volume if (e.g., when) a particle size distribution measured through a laser diffraction method is calculated from particles having a smaller particle size. In some embodiments, an "average particle diameter" may be measured from a scanning electron microscopy (SEM) image or a transmission electron microscopy (TEM) image through a manual or software. Also, depending on context, when particles are spherical, "diameter" indicates a particle diameter or an average particle diameter, and when the particles are non-spherical, the "diameter" indicates a major axis length or an average major axis length. The terms "fibril" or "fibrils" as utilized herein refer to fibrous shape of a substance that has a larger aspect ratio than a particulate of said substance. The aspect ratio may be measured using the same methods as described for the "particle diameter". As utilized herein, the terms "fibrillized" and "fibrillize" refer to a process of converting (e.g., by grinding or pulverizing) particulates of a substance into fibrous shape (i.e., fibrils) of said substance that has higher aspect ratio than the particulates.

The term "metal" as utilized herein includes all of metals and metalloids such as silicon and germanium in an elemental or ionic state.

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to a positive electrode active material or a negative electrode active material.

The terms "delithiate" and "delithiating" as utilized herein refer to a process of removing lithium from a positive electrode active material or a negative electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

Hereinafter, a method of a preparing a dry electrode film, a dry electrode film, a dry electrode including the dry electrode film, and a lithium battery including the dry electrode film will be described in more detail.

A method of preparing a dry electrode film according to one or more embodiments may include: providing frozen first dry binder particles; pulverizing the frozen first dry binder particles to prepare second dry binder particles; mixing a dry electrode active material and the second dry binder particles to prepare a dry electrode mixture; and processing the dry electrode mixture into a dry electrode film including a dry binder through a rolling device including a calender roll, wherein a second particle diameter (e.g. average particle diameter, such as D50) of the second dry binder particles is less than a first particle diameter (e.g. average particle diameter, such as D50) of the frozen first dry binder particles.

The frozen first dry binder particles may have, for example, brittleness. Therefore, by pulverizing the frozen first dry binder particles, while aggregation of the frozen first dry binder particles is prevented or reduced, the frozen first dry binder particles may be easily converted into the second dry binder particles having a reduced size. The mechanical properties of a dry electrode film, which is prepared utilizing the second dry binder particles having a reduced size and a substantially uniform size, may be improved. In the preparing of the dry electrode mixture and/or the processing of the dry electrode film, for example, the second dry binder particles may be more easily fibrillized. For example, among the second dry binder particles utilized in preparing a dry electrode film, a content (e.g., amount) of the second dry binder particles converted into a fibrillized binder, that is, a conversion ratio, may increase. For example, because the size of the second dry binder particle is decreased, the second dry binder particles may be more uniformly mixed with the dry electrode active material. As a result, despite a decrease in content (e.g., amount) of the second dry binder particles utilized in preparing a dry electrode film, a dry electrode film having excellent or suitable mechanical properties may be prepared. The energy density of a dry electrode film may be improved by decreasing a content (e.g., amount) of a dry binder included in the dry electrode film.

In contrast, a sample of unfrozen first dry binder particles may have, for example, ductility. Therefore, it may be difficult to prepare second dry binder particles having a particle diameter decreased due to aggregation of the first dry binder particles having ductility in a process of pulverizing the unfrozen first dry binder particles. Rather, due to aggregation of the unfrozen first dry binder particles, a particle diameter of second dry binder particles may rather increase, for example, in a process of pulverizing the unfrozen first dry binder particles. The energy density and mechanical properties of a dry electrode film, which is prepared utilizing such second dry binder particles which are aggregated and have an increased particle diameter, may be degraded.

First, the frozen first dry binder particles are provided. A method of providing the frozen first dry binder particles is not particularly limited. For example, the frozen first dry binder particles may be available. The frozen first dry binder particles may be prepared by storing first dry binder particles at room temperature, for example, in a freezing device. The first dry binder particles at room temperature may be introduced into a sub-zero pulverizer and maintained for a certain time to prepare the frozen first dry binder particles.

A temperature of the frozen first dry binder particles may be less than a glass transition temperature of the dry binder. A temperature of the frozen first dry binder particles may be, for example, less than 0 °C, -5 °C or less, -10 °C or less, or -15 °C or less. The temperature of the frozen first dry binder particles may be, for example, in a range of about -100 °C to less than about 0 °C, about -80 °C to about -5 °C, about -50 °C to about -10 °C, or about -40 °C to about -15 °C. Because the frozen first dry binder particles have a temperature in such a range and thus have increased brittleness, the frozen first dry binder particles may be more easily pulverized. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).

The first particle diameter (e.g. average particle diameter, such as D50) of the first dry binder particles may be, for example, 200 micrometer (µm) or more, 300 µm or more, 400 µm or more, or 500 µm or more. The first particle diameter (e.g. average particle diameter, such as D50) of the first dry binder particles may be, for example, in a range of about 200 µm to about 2,000 µm, about 300 µm to about 1,000 µm, about 400 µm to about 800 µm, or about 500 µm to about 700 µm. Because the first dry binder particles have a particle diameter in such a range, the first dry binder particles may be pulverized in a frozen state to be easily converted into the second dry binder particles.

Next, the frozen first dry binder particles may be pulverized to prepare the second dry binder particles.

The second particle diameter (e.g. average particle diameter, such as D50) of the second dry binder particles may be 90 % or less, 70 % or less, 50 % or less, 30 % or less, 20 % or less, 10 % or less, 5 % or less, 3 % or less, or 2 % or less of the first particle diameter (e.g. average particle diameter, such as D50) of the first dry binder particles. The second particle diameter (e.g. average particle diameter, such as D50) of the second dry binder particles may be in a range of about 0.1 % to about 90 %, about 0.5 % to about 70 %, about 1 % to about 50 %, about 1 % to about 30 %, about 1 % to about 20 %, about 1 % to about 10 %, about 1 % to about 5 %, about 1 % to about 3 %, or about 1 % to about 2 % of the first particle diameter (e.g. average particle diameter, such as D50) of the first dry binder particles. Because the second particle diameter of the second dry binder particles is 90 % or less of the first particle diameter of the first dry binder particles, the second dry binder particles may be more easily fibrillized in a process of preparing a dry electrode film, and because the second dry binder particles are more uniformly mixed in the dry electrode mixture, a dry electrode film prepared from the second dry binder particles may have improved mechanical properties.

The second particle diameter (e.g. average particle diameter, such as D50) of the second dry binder particles may be, for example, 100 µm or less, 90 µm or less, 70 µm or less, 60 µm or less, 50 µm or less, 40 µm or less, or 30 µm or less. The second particle diameter (e.g. average particle diameter, such as D50) of the second dry binder particles may be, for example, in a range of about 1 µm to about 100 µm, about 1 µm to about 90 µm, about 1 µm to about 70 µm, about 1 µm to about 60 µm, about 1 µm to about 50 µm, about 1 µm to about 40 µm, or about 1 µm to about 30 µm (e.g. about 2 µm to about 100 µm, about 2 µm to about 90 µm, about 2 µm to about 70 µm, about 2 µm to about 60 µm, about 2 µm to about 50 µm, about 2 µm to about 40 µm, or about 2 µm to about 30 µm ; about 5 µm to about 100 µm, about 5 µm to about 90 µm, about 5 µm to about 70 µm, about 5 µm to about 60 µm, about 5 µm to about 50 µm, about 5 µm to about 40 µm, or about 5 µm to about 30 µm). Because the second dry binder particles have a particle diameter in such a range, the second dry binder particles may be more easily fibrillized in a process of preparing a dry electrode film. Accordingly, a dry electrode film prepared from the second dry binder particles may have improved mechanical properties.

The pulverizing of the frozen first dry binder particles to prepare the second dry binder particles may be performed at a temperature of, for example, -10 °C or less, -15 °C or less, -20 °C or less, or -25 °C or less. The pulverizing of the frozen first dry binder particles to prepare the second dry binder particles may be performed at a temperature of, for example, about -100 °C to about -10 °C, about -80 °C to about -15 °C, about -70 °C to about -15 °C, or about -50 °C to about -15 °C. The frozen first dry binder particles may be pulverized at such a temperature, thereby easily pulverizing the frozen first dry binder. Aggregation of the second dry binder particles prepared by pulverizing the frozen first dry binder particles at such a temperature may be effectively prevented or reduced. The pulverizing of the frozen first dry binder particles to prepare the second dry binder particles may be performed, for example, in a pulverizer. The inside of the pulverizer may maintain the described temperature range.

The pulverizing of the frozen first dry binder particles to prepare the second dry binder particles may be performed for, for example, about 0.5 minutes to about 10 minutes. The frozen first dry binder particles may be pulverized in such a time range to easily pulverize the frozen first dry binder particles. If (e.g., when) a pulverization time is excessively short, the pulverization of the frozen first dry binder particles may be insufficient. If (e.g., when) the pulverization time is excessively long, there is no significant difference in particle diameter of the second dry binder particles, and thus pulverization efficiency may decrease.

The pulverizing of the frozen first dry binder particles to prepare the second dry binder particles may be performed, for example, in an air atmosphere, an oxygen atmosphere, or an inert atmosphere. The pulverizing of the frozen first dry binder particles to prepare the second dry binder particles may be performed, for example, in an air atmosphere or an oxygen atmosphere, thereby more simply and easily performing a pulverization process. The pulverizing of the frozen first dry binder particles to prepare the second dry binder particles may be performed, for example, in an inert atmosphere, thereby more effectively blocking side reactions caused by oxygen in the air and heat generated during a pulverization process. The inert atmosphere may include, for example, nitrogen or argon, but one or more embodiments are not limited thereto.

In an X-ray diffraction (XRD) spectrum of the second dry binder particles, for example, a degree of crystallinity, which is a ratio of an area of a sharp (100) crystalline peak at a diffraction angle 2θ of about 18°±1.5° to the total peak area of the crystalline (100) peak at a diffraction angle 2θ of about 18°±1.5° and a broad amorphous peak at a diffraction angle 2θ of about 16.5°±3.0° (e.g., sum of the total peak area of the crystalline (100) peak and the broad amorphous peak), may be in a range of about 50 % to about 90 %, about 55 % to about 90 %, about 60 % to about 90 %, about 65 % to about 90 %, about 70 % to about 90 %, about 75 % to about 90 %, or about 80 % to about 90%. At a diffraction angle 2θ of about 13.0° to about 20.0°, the XRD spectrum of the second dry binder particles may include, for example, at least one of a sharp (100) crystalline peak at a diffraction angle 2θ of about 18°±1.5° and a broad amorphous peak at a diffraction angle 2θ of about 16.5°±3.0° appearing at a left side of the (100) crystalline peak. In the second dry binder particles having a degree of crystallinity of 100 %, for example, in an XRD spectrum, only a sharp (100) crystalline peak at a diffraction angle 2θ of about 18°±1.5° appears, and a broad amorphous peak at a diffraction angle 2θ of about 16.5°±3.0° does not appear. In the second dry binder particles having a degree of crystallinity of 0 %, for example, in an XRD spectrum, a sharp (100) crystalline peak at a diffraction angle 2θ of about 18°±1.5° does not appear, and only a broad amorphous peak at a diffraction angle 2θ of about 16.5°±3.0° may appear. The second dry binder particles may be, for example, polytetrafluoroethylene (PTFE) particles.

If (e.g., when) the second dry binder particles have a degree of crystallinity in such a range, the mechanical properties of a dry electrode film prepared from the second dry binder may be further improved. The deterioration of a dry electrode including such a dry electrode film may be suppressed or reduced during charging/discharging. As a result, the cycle characteristics of a lithium battery including such a dry electrode film may be further improved.

Next, the dry electrode active material and the second dry binder particles may be mixed to prepare the dry electrode mixture. For example, the dry electrode active material and the second dry binder particles may be dry-mixed to prepare the dry electrode mixture.

The dry-mixing refers to that mixing is performed in a state in which a process solvent is excluded (e.g., not included). The process solvent may be, for example, a solvent utilized in preparing an electrode slurry. The process solvent may be, for example, water, N-methylpyrrolidone (NMP), and/or the like, but is not limited thereto. A material is not limited as long as the material is a process solvent utilized in preparing an electrode slurry. The dry-mixing may be performed, for example, utilizing a stirrer. The dry-mixing may be performed at a rotation speed of 10 rpm to 10,000 rpm at a temperature of 15 °C to 65 °C utilizing the stirrer. The dry-mixing may be performed for about 1 minute to about 200 minutes utilizing the stirrer. The dry-mixing may be performed, for example, one or more times. First, a first dry electrode mixture may be prepared by primarily dry-mixing the dry electrode active material and the second dry binder particles. The primary dry-mixing may be performed, for example, at a rotation speed of about 10 rpm to about 2,000 rpm at a temperature of about 25 °C to about 65 °C for 15 minutes or less. Subsequently, a second dry electrode mixture may be prepared by additionally secondarily dry-mixing the first dry electrode mixture. The secondary dry-mixing may be performed, for example, at a rotation speed of about 3,000 rpm to about 9,000 rpm at a temperature of about 25 °C to about 65 °C for about 10 minutes to about 60 minutes. The dry electrode mixture including a fibrillized dry binder may be obtained through the secondary dry-mixing. For example, the secondary dry-mixing may not be provided. In the processing of the dry electrode mixture into the dry electrode film, for example, utilizing the rolling device, a binder may be fibrillized.

The stirrer may be, for example, a kneader. The stirrer may include, for example, a chamber, at least one rotating shaft provided inside the chamber to rotate, and a blade rotatably coupled to the rotating shaft and provided in a length direction of the rotating shaft. The blade may be, for example, at least one selected from among a ribbon blade, a sigma blade, a Z blade, a dispersion blade, and a screw blade. By including the blade, without a solvent, the dry electrode active material and the second dry binder particles may be effectively mixed to prepare a dough-like mixture.

The dry electrode mixture may further include, for example, a dry conductive material. For example, the first dry electrode mixture may be prepared by dry-mixing the dry electrode active material, the dry conductive material, and the second dry binder particles. Subsequently, the second dry electrode mixture may be prepared by additionally secondarily dry-mixing the first dry electrode mixture. For a specific method of preparing the first dry electrode mixture and the second dry electrode mixture, the above description is referred to.

The dry conductive material may be, for example, a conductive material that is not impregnated, dissolved, or dispersed in a process solvent in a process of preparing a dry electrode mixture and a dry electrode film. The dry conductive material may be, for example, a conductive material that does not include a process solvent or come into contact with a process solvent in a process of preparing a dry electrode mixture and a dry electrode film. The dry conductive material may include, for example, a carbon-based conductive material. The carbon-based conductive material may include, for example, a fibrous carbon-based material having an aspect ratio of 10 or more, a particulate carbon-based material having an aspect ratio of less than 10, or a combination thereof.

The fibrous carbon-based materials having an aspect ratio of 10 or more may include, for example, a carbon fiber, carbon nanotubes, carbon nanobelts, and/or the like, but one or more embodiments are not limited thereto. Any materials utilized as a carbon-based conductive material in the art may be utilized. The fibrous carbon-based material having an aspect ratio of 10 or more may be selected from carbon-based materials described above.

The particulate carbon-based material having an aspect ratio of less than 10 may include, for example, Denka black, carbon black, acetylene black, Ketjen black, natural graphite, artificial graphite, and/or the like, but one or more embodiments are not limited thereto. Any material utilized as a carbon-based conductive material in the art may be utilized. The aspect ratio of the particulate carbon-based material may be, for example, in a range of about 1 to about 7, about 1 to about 5, about 1 to about 3, or about 1 to about 2.

The dry conductive material may include, for example, a metal powder, metal fiber, or metal tube of copper, nickel, aluminium, or silver, a conductive polymer such as a polyphenylene derivative, and/or the like, but one or more embodiments are not limited thereto. Any material utilized as a conductive material in the art may be utilized.

A content (e.g., amount) of the dry conductive material included in the dry electrode mixture may be, for example, in a range of about 0.1 wt% to about 5 wt%, about 0.5 wt% to about 4 wt%, or about 1 wt% to about 3 wt% with respect to the total weight of the dry electrode mixture. Because the dry electrode mixture includes the dry conductive material in such a range, the conductivity of a dry electrode film prepared therefrom may be improved, and the cycle characteristics of a lithium battery including such a dry electrode film may be improved. A plasticizer or a pore former may be further added to the dry electrode mixture to form pores in an electrode plate.

Then, the dry electrode mixture may be processed into the dry electrode film including the dry binder utilizing the rolling device including the calender roll.

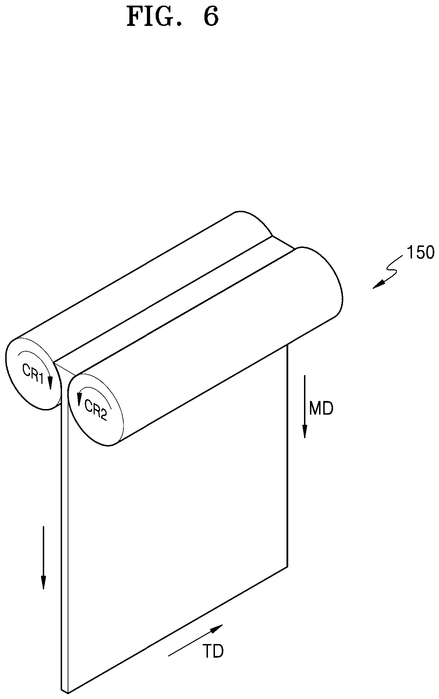

Referring to FIG. 6, the rolling device may include, for example, at least one pair of calender rolls CR1 and CR2, and the dry electrode mixture may be allowed to pass between the pair of calender rolls, thereby forming the dry electrode film including the dry binder. The pair of calender rolls may rotate in opposite directions, and the dry electrode mixture may pass between the calender rolls to form the dry electrode film. The rolling device may include, for example, two or more pairs of calender rolls, and the dry electrode film may sequentially pass the two or more pairs of calender rolls so that physical properties and/or the like may be more effectively controlled or selected. The pair of calender rolls may rotate at the same speed or different speeds. A rotation speed ratio of the pair of calender rolls may be in a range of about 1:1 to about 9:1, about 2:1 to about 8:1, about 3:1 to about 7:1, or about 4:1 to about 6:1. By varying the rotation speed of the pair of calender rolls, the surface porosity of a dry electrode film may be improved, thereby improving electrolyte impregnability. As a result, the high-rate characteristics of a lithium battery including a dry electrode film may be improved. An interval between the pair of calender rolls may be adjusted according to a required thickness of a dry electrode film, a mixture density, and/or the like.

A dry electrode film may include a dry binder. The dry binder may be, for example, a binder that is not impregnated, dissolved, or dispersed in a process solvent.in a process of preparing a dry electrode film. The dry binder may be, for example, a binder that does not include or come into contact with a process solvent in a process of preparing a dry electrode film.

While the dry electrode mixture passes between the calender rolls, for example, some or all of the second dry binder particles included in the dry electrode mixture may be fibrillized to form the dry electrode film including the dry binder.

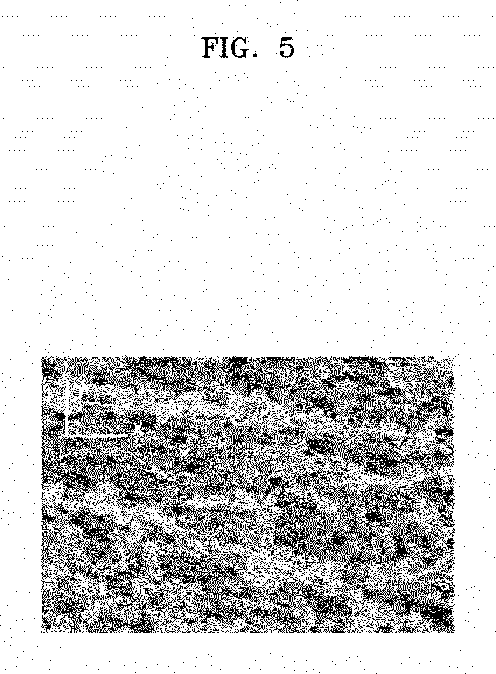

Referring to FIG. 5, the dry binder may be, for example, a fibrillized binder or a fibrous binder. Referring to FIG. 5, the fibrillized binder may be fibrillized in one direction, for example, in a machine direction MD of the dry electrode film (X direction in FIG. 5). The fibrillized binder or fibrous binder may serve as a matrix structure for supporting and binding an electrode active material and other components included in an electrode active material layer. It may be confirmed that the fibrillized binder or the fibrous binder has a fibrous form, for example, from a SEM image of an electrode cross section. The fibrillized binder or fibrous binder may have an aspect ratio of, for example, 10 or more, 20 or more, 50 or more, or 100 or more.

The dry binders may include, for example, PTFE, a polyvinylidene fluoride-hexapropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene (PP), an ethylene-propylene-diene monomer (EPDM) rubber, a sulfonated-EPDM, styrene butadiene rubber (SBR), fluoro rubber, or a copolymer thereof, but one or more embodiments are not necessarily limited thereto. Any binder utilized in preparing a dry electrode may be utilized. In particular, the dry binder may include a fluorine-based binder. The fluorine-based binder may include, for example, PTFE, a PVDF-HFP copolymer, or PVDF. The first dry binder particles and the second dry binder particles utilized in preparing a dry electrode film may also be selected from the above dry binders.

A glass transition temperature Tg of the dry binder may be, for example, in a range of about -30 °C to about 150 °C, about 15 °C to about 150 °C, about 15 °C to about 130 °C, about 50 °C to about 130 °C, about 100 °C to about 130 °C, or about 110 °C to about 130 °C. The glass transition temperature Tg of the dry binder may be, for example, in a range of about -30 °C to about 150 °C, about -30 °C to about 100 °C, about -30 °C to about 50 °C, about -30 °C to about 15 °C, about -30 °C to about -10 °C, or about -30 ° C to about -20 ° C. A glass transition temperature of PTFE may be, for example, in a range of about 115 °C to about 130 °C. Because the dry binder has a glass transition temperature in such a range, the fibrillized binder or fibrous binder may be more easily obtained in a process of preparing a dry electrode.

A content (e.g., amount) of the second dry binder particles in the dry electrode mixture may be, for example, in a range of about 0.1 wt% to about 2 wt%, about 0.5 wt% to about 2 wt%, or about 1 wt% to about 2 wt% of the total weight of the dry electrode mixture. Because the dry electrode mixture includes the dry binder in such a range, a content (e.g., amount) of the dry binder in a dry electrode film prepared therefrom may be reduced. Accordingly, the energy density of the dry electrode film produced may increase.

The content (e.g., amount) of the dry binder in the dry electrode film may be, for example, in a range of about 0.1 wt% to about 2 wt%, about 0.5 wt% to about 2 wt%, or about 1 wt% to about 2 wt% of the total weight of the dry electrode film. Because the dry electrode film includes the dry binder in such a range, the dry electrode film may provide improved energy density and excellent or suitable mechanical properties at the same time. During preparation of the dry electrode film, the second dry binder particles may be more easily fibrillized at a higher conversion ratio, thereby maintaining excellent or suitable mechanical properties while reducing a binder content (e.g., amount) of the dry electrode film. If (e.g., when) the content (e.g., amount) of the dry binder is excessively low, the mechanical properties of the dry electrode film may deteriorate. If (e.g., when) the content (e.g., amount) of the dry binder is excessively increased, the energy density of the dry electrode film may be decreased.

A dry electrode film prepared utilizing the dry electrode mixture including the first dry binder particles may have a first elongation at break EB1. A dry electrode film prepared by the first dry binder particles being mixed with the dry electrode active material without being pulverized may have the first elongation at break EB1. A dry electrode film prepared utilizing the dry electrode mixture including the second dry binder particles instead of the first dry binder particles may have a second elongation at break EB2. Except that the second dry binder particles having the same content (e.g., amount) are utilized instead of the first dry binder particles, for example, the second dry binder particles are mixed with the dry electrode active material, a dry electrode film prepared in substantially the same manner may have the second elongation at break EB2.

The first elongation at break and the second elongation at break may be, for example, elongation at break in a machine direction MD of the dry electrode film. Referring to FIG. 6, the machine direction of the dry electrode film is a traveling direction in which the dry electrode film is formed by passing the pair of calender rolls. The first elongation at break and the second elongation at break may be measured utilizing a universal test meter (UTM), for example, according to JIS P8113.

A ratio EB2/EB1 of the second elongation at break to the first elongation at break may be, for example, 1.1 or more, 1.2 or more, 1.3 or more, 1.4 or more, 1.5 or more, 1.6 or more, 1.7 or more, or 1.8 or more. The ratio EB2/EB1 of the second elongation at break to the first elongation at break may be, for example, in a range of about 1.1 to about 10, about 1.2 to about 8, about 1.3 to about 6, about 1.4 to about 4, about 1.4 to about 3, or about 1.4 to about 2 (e.g. about 1.5 to about 2, about 1.6 to about 2, about 1.7 to about 2, or about 1.8 to about 2). Because the dry electrode film uses the second dry binder particles, the dry electrode film may have improved mechanical properties. The deterioration of a dry electrode including such a dry electrode film may be suppressed or reduced during charging/discharging. As a result, the cycle characteristics of a lithium battery including such a dry electrode film may be further improved.

The second elongation at break of a dry electrode film prepared utilizing the second dry binder particles may be, for example, 14 % or more, 16 % or more, or 18 % or more (e.g. about 20% or more, or about 22% or more). The second elongation at break of a dry electrode film prepared utilizing the second dry binder particles may be, for example, in a range of about 14 % to about 50 %, about 16 % to about 40 %, or about 18 % to about 30 % (e.g. about 20 % to about 30 %, or about 22 % to about 30 %). Because the dry electrode film has such second elongation at break, the deterioration of a dry electrode including such a dry electrode film may be suppressed or reduced during charging/discharging. As a result, the cycle characteristics of a lithium battery including such a dry electrode film may be further improved.

A dry electrode film prepared utilizing the dry electrode mixture including the first dry binder particles may have a first tensile strength at break TSB1. A dry electrode film prepared by the first dry binder particles being mixed with the dry electrode active material without being pulverized may have the first tensile strength at break TSB1. A dry electrode film prepared utilizing the dry electrode mixture including the second dry binder particles instead of the first dry binder particles may have a second tensile strength at break TSB2. Except that the second dry binder particles having the same content (e.g., amount) are utilized instead of the first dry binder particles, for example, the second dry binder particles are mixed with the dry electrode active material, a dry electrode film prepared in substantially the same manner may have the first tensile strength at break TSB2.

The first tensile strength at break and the second tensile strength at break may be, for example, tensile strength at break in a machine direction MD of the dry electrode film. Referring to FIG. 6, the machine direction MD of the dry electrode film is a traveling direction in which the dry electrode film is formed by passing the pair of calender rolls. The machine direction MD of the dry electrode film is orthogonal to a transverse direction TD. Tensile strength at break may be measured utilizing a UTM, for example, according to JIS P8113.

A ratio TSB2/TSB1 of the second tensile strength at break to the first tensile strength at break may be, for example, 1.1 or more, 1.2 or more, 1.3 or more, or 1.4 or more (e.g. 1.5 or more, 1.6 or more, 1.7 or more, 1.8 or more, 1.9 or more, 2.0 or more, or 2.05 or more). The ratio TSB2/TSB1 of the second tensile strength at break to the first tensile strength at break may be, for example, in a range of about 1.1 to about 10, about 1.2 to about 8, about 1.3 to about 6, about 1.4 to about 4, about 1.4 to about 3, or about 1.4 to about 2.5 (e.g. about 1.5 to about 2.5, about 1.6 to about 2.5, about 1.7 to about 2.5, about 1.8 to about 2.5, about 1.9 to about 2.5, about 2.0 to about 2.5, or about 2.05 to about 2.5). Because the second dry binder particles are utilized in the dry electrode film, the dry electrode film may have improved mechanical properties. The deterioration of a dry electrode including such a dry electrode film during charging/discharging may be suppressed or reduced. As a result, the cycle characteristics of a lithium battery including such a dry electrode film may be further improved.

The second tensile strength at break of a dry electrode film prepared utilizing the second dry binder particles may be, for example, 0.5 newton per square millimeter (N/mm²) or more, 0.6 N/mm² or more, or 0.7 N/mm² or more (e.g. 0.8 N/mm² or more, 0.9 N/mm² or more, 1.0 N/mm² or more, or 1.01 N/mm² or more). The second tensile strength at break of the dry electrode film prepared utilizing the second dry binder particles may be, for example, in a range of about 0.5 N/mm² to about 10 N/mm², about 0.6 N/mm² to about 5 N/mm², about 0.7 N/mm²to about 3 N/mm², about 0.7 N/mm² to about 2 N/mm², or about 0.7 N/mm² to about 1.5 N/mm² (e.g. about 0.8 N/mm² to about 1.5 N/mm², about 0.9 N/mm² to about 1.5 N/mm², about 1.0 N/mm² to about 1.5 N/mm², or about 1.01 N/mm² to about 1.5 N/mm²). Because the dry electrode film has such second elongation at break, the deterioration of a dry electrode including such a dry electrode film during charging/discharging may be suppressed or reduced. As a result, the cycle characteristics of a lithium battery including such a dry electrode film may be further improved.

A residual processing solvent may be absent in a dry electrode film prepared utilizing the second dry binder particles. Because the dry electrode film includes, for example, the dry electrode active material, the dry binder, and the dry conductive material, and a process solvent is not utilized in a process of preparing a dry electrode film 150, an intentionally utilized residual process solvent may be absent in the dry electrode film. Because the dry electrode film is manufactured in a dry type or kind, the dry electrode film may not include (e.g., may exclude) an (e.g., any) intentionally added process solvent. For example, the dry electrode film may be free of (i.e., may not include (e.g., may exclude)) a (e.g., any) residual process solvent. An unintentional trace amount of solvent may remain in the dry electrode film, but the solvent is not an intentionally added process solvent. Therefore, the dry electrode film is distinguished from a wet electrode active material layer prepared by mixing components and a process solvent and then drying the resultant mixture to remove a portion or the entirety of the process solvent.

The dry electrode film prepared utilizing the second dry binder particles may be, for example, a self-standing film. The dry electrode film may maintain the form of a film, for example, without a support. The dry electrode film may be prepared as a separate self-supporting film and then provided on an electrode current collector. In the dry electrode film, the dry binder may form, for example, a matrix structure. The binder matrix structure formed in the dry electrode film may bind the dry electrode active material, the dry conductive material, and/or the like, which constitute the dry electrode film, to each other to support the dry electrode active material, the dry conductive material, and/or the like so that the dry electrode film may self-stand or be self-supported. The dry electrode film may be utilized in manufacturing a lithium battery without a support such as a current collector. The dry electrode film may have, for example, sufficient film strength to be rolled, handled, and/or unrolled, without other supports.

The dry electrode mixture and the dry electrode film prepared therefrom may include a dry electrode active material. The dry electrode active material may be, for example, an electrode active material that is not impregnated, dissolved, or dispersed in a process solvent. The dry electrode active material may be, for example, an electrode active material that does not include or come into contact with a process solvent. The dry electrode active material may be, for example, an electrode active material that does not come into contact with a process solvent in a process of preparing a dry electrode mixture, a dry electrode film, and a dry electrode.

The dry electrode active material may be, for example, a dry positive electrode active material.

As a positive electrode active material, lithium metal oxide or any material, which and is commonly utilized in the art, may be utilized without limitation.

For example, the positive electrode active material may include at least one composite oxide of lithium and a metal selected from among cobalt, manganese, nickel, and a combination thereof. A specific example of the positive electrode active material may include a compound represented by any one selected from among formulas of LiₐA_{1-b}B'_{b}D₂ (wherein 0.90≤a≤1 and 0≤b≤0.5), LiₐE_{1-b}B'_{b}O_{2-c}D_{c} (wherein 0.90≤a≤1, 0≤b≤0.5, and 0≤c≤0.05), LiE_{2-b}B'_{b}O_{4-c}D_{c} (wherein 0≤b≤0.5 and 0≤c≤0.05), LiₐNi_{1-b-c}Co_{b}B'_{c}D_{α} (wherein 0.90≤a≤1, 0≤b≤0.5, 0≤c≤0.05, and 0<α≤2), LiₐNi_{1-b-c}Co_{b}B'_{c}O_{2-α}F_{α} (wherein 0.90≤a≤1, 0≤b≤0.5, 0≤c≤0.05, and 0<α<2), LiₐNi_{1-b-c}Co_{b}B'_{c}O_{2-α}F₂ (wherein 0.90≤a≤1, 0≤b≤0.5, 0≤c≤0.05, and 0<α<2), LiₐNi_{1-b-c}Mn_{b}B'_{c}D_{α} (wherein 0.90≤a≤1, 0≤b≤0.5, 0≤c≤0.05, and 0<α≤2), LiₐNi_{1-b-c}Mn_{b}B'_{c}O_{2-α}F_{α} (wherein 0.90≤a≤1, 0≤b≤0.5, 0≤c≤0.05, and 0<α<2), LiₐNi_{1-b-c}Mn_{b}B'_{c}O_{2-α}F₂ (wherein 0.90≤a≤1, 0≤b≤0.5, 0≤c≤0.05, and 0<α<2), LiₐNi_{b}E_{c}G_{d}O₂ (wherein 0.90≤a≤1, 0≤b≤0.9, and 0≤c≤0.5, and 0.001≤d≤0.1), LiₐNi_{b}Co_{c}Mn_{d}GₑO₂ (wherein 0.90≤a≤1, 0≤b≤0.9, 0≤c≤0.5, 0≤d≤0.5, and 0.001≤e≤0.1), LiₐNiG_{b}O₂ (wherein 0.90≤a≤1 and 0.001≤b≤0.1), LiₐCoG_{b}O₂ (wherein 0.90≤a≤1 and 0.001≤b≤0.1), LiₐMnG_{b}O₂ (wherein 0.90≤a≤1 and 0.001≤b≤0.1), LiₐMn₂G_{b}O₄ (wherein 0.90≤a≤1 and 0.001≤b≤0.1), QO₂, QS₂, LiQS₂, V₂O₅, LiV₂O₅; LiI'O₂, LiNiVO₄, Li_{(3-f)}J₂(PO₄)₃ (wherein 0≤f≤2), Li_{(3-f)}Fe₂(PO₄)₃ (wherein 0≤f≤2), and LiFePO₄.

In the formulas representing the described compounds, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof.

It is also possible to utilize a compound in which a coating layer is added to a surface of the above compound, and it is also possible to utilize a mixture of the above compound and a compound in which a coating layer is added. The coating layer added to the surface of the above compound may include, for example, a coating element compound of an oxide or a hydroxide of a coating element, an oxyhydroxide of a coating element, an oxycarbonate of a coating element, or a hydroxycarbonate of a coating element. A compound constituting the coating layer is amorphous or crystalline. The coating element included in the coating layer may include Mg, Al, Co, K, Na, Ca, Si, Ti, V, Sn, Ge, Ga, B, As, Zr, or a mixture thereof. A method of forming a coating layer may be selected within a range that does not adversely affect the physical properties of a positive electrode active material. A coating method may include, for example, spray coating, dipping, and/or the like. Because a specific coating method may be well understood by those skilled in the art, a detailed description thereof will not be provided.

The positive electrode active material may be, for example, a composite positive electrode active material.

The composite positive electrode active material may include, for example, a core including a lithium transition metal oxide, and a shell provided along a surface of the core, wherein the shell includes at least one first metal oxide represented by a formula of MₐO_{b} (wherein 0<a≤3, 0<b<4, and if (e.g., when) a is 1, 2, or 3, b is not an integer), and graphene, the first metal oxide is provided in a graphene matrix, M is at least one metal selected from among Groups 2 to 13, Group 15, and Group 16 of the Periodic Table of Elements), the lithium transition metal oxide includes nickel, and a nickel content (e.g., amount) is 80 mol% or more with respect to the total number of moles of a transition metal. The shell including the first metal oxide and graphene may be provided on the core of the composite positive electrode active material.

Graphene according to a related art is difficult to uniformly apply on the core due to agglomeration. In contrast, in the composite positive electrode active material, because a composite including a plurality of first metal oxides provided in the graphene matrix is utilized, aggregation of graphene may be prevented or reduced, and also the substantially uniform shell may be provided on the core. Therefore, contact between the core and an electrolyte may be effectively blocked, thereby preventing or reducing side reactions due to the contact between the core and the electrolyte. In some embodiments, reduction of nickel ions (Ni³⁺->Ni²⁺) and cation mixing due to an electrolyte may be suppressed or reduced, thereby suppressing the formation of a resistive layer of a NiO phase and/or the like. Also, elution of nickel ions may be suppressed or reduced. Because the shell including graphene has flexibility, the shell may easily accommodate a volume change of the composite positive electrode active material during charging/discharging, thereby suppressing cracks from occurring inside the composite positive electrode active material. Because graphene has high electronic conductivity, interfacial resistance between a composite positive electrode active material and an electrolyte may be reduced. Accordingly, despite the introduction of the shell including graphene, the internal resistance of a lithium battery may be maintained or reduced. In some embodiments, because the first metal oxide may withstand relatively high voltage, the deterioration of the lithium transition metal oxide included in the core may be prevented or reduced during charging/discharging at a high voltage. As a result, the cycle characteristics and high-temperature stability of a lithium battery including the composite positive electrode active material may be improved. The shell may include, for example, at least one first metal oxide or two or more different first metal oxides. In some embodiments, while the composite positive electrode active material includes the lithium transition metal oxide at a high nickel content (e.g., amount) of 80 mol% or more with respect to the total number of moles of the transition metal, the shell including the first metal oxide and graphene is provided on the core, thereby providing high discharge capacity and cycle characteristics at the same time. Therefore, the composite positive electrode active material having a high nickel content (e.g., amount) of 80 mol% or more may provide improved capacity while still providing excellent or suitable lifespan characteristics as compared with a composite positive electrode active material having a relatively low nickel content (e.g., amount). A metal included in the first metal oxide may include, for example, at least one selected from among Al, Nb, Mg, Sc, Ti, Zr, V, W, Mn, Fe, Co, Pd, Cu, Ag, Zn, Sb, and Se.

The first metal oxide may include, for example, at least one selected from among Al₂O_{z} (wherein 0<z<3), NbOₓ (wherein 0<x<2.5), MgOₓ(wherein 0<x<1), Sc₂O_{z} (wherein 0<z<3), TiO_{y} (wherein 0<y<2), ZrO_{y} (wherein 0<y<2), V₂O_{z} (wherein 0<z<3), WO_{y} (wherein 0<y<2), MnO_{y} (wherein 0<y<2), Fe₂O_{z} (wherein 0<z<3), Co₃O_{w} (wherein 0<w<4), PdOₓ(wherein 0<x<1), CuOₓ(wherein 0<x<1), AgOₓ(wherein 0<x<1), ZnOₓ (wherein 0<x<1), Sb₂O_{z} (wherein 0<z<3), and SeO_{y} (wherein 0<y<2). The first metal oxide may be provided in the graphene matrix, thereby improving the uniformity of the shell provided on the core and further improving the withstand voltage of the composite positive electrode active material. For example, the shell may include Al₂Oₓ (wherein 0<x<3). The shell may further include at least one second metal oxide represented by formula of MₐO_{c} (wherein 0<a≤3, 0<c≤4, and if (e.g., when) a is 1, 2, 3, c is an integer). M may be at least one metal selected from among Groups 2 to 13, Group 15, and Group 16 of the Periodic Table of Elements. For example, the second metal oxide may include the same metal as the first metal oxide, and c/a that is a ratio of c to a of the second metal oxide may have a greater value than b/a that is a ratio of b to a of the first metal oxide. For example, c/a > b/a. The second metal oxide is selected from among, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide may be a reduction product of the second metal oxide. A portion or the entirety of the second metal oxide may be reduced to obtain the first metal oxide. Accordingly, the first metal oxide has a lower oxygen content (e.g., amount) and a lower metal oxidation number than the second metal oxide. For example, the shell may include Al₂Oₓ (wherein 0<x<3) that is the first metal oxide and Al₂O₃ that is the second metal oxide. In the composite positive electrode active material, for example, the graphene included in the shell may be chemically bound to a transition metal of the lithium transition metal oxide included in the core through chemical bonding. A carbon atom (C) of the graphene included in the shell may be chemically bound to a transition metal (Me) of the lithium transition metal oxide through a C-O-Me bond (for example, a C-O-Ni bond), for example, utilizing an oxygen atom. The graphene included in the shell may be chemically bound to the lithium transition metal oxide included in the core through a chemical bond, thereby allowing the core and the shell to be a composite. Therefore, the composite positive electrode active material may be distinguished from a simple physical mixture of graphene and a lithium transition metal oxide. In some embodiments, the first metal oxide included in the shell may also be chemically bound to the graphene through a chemical bond. Here, the chemical bond may be, for example, a covalent bond or an ionic bond. The covalent bond may be, for example, a bond including at least one selected from an ester group, an ether group, a carbonyl group, an amide group, a carbonate anhydride group, and an acid anhydride group. The ionic bond may be, for example, a bond including a carboxylic acid ion, an ammonium ion, an acyl cation group, and/or the like. A thickness of the shell may be, for example, in a range of about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. If (e.g., when) the shell has a thickness in such a range, an increase in internal resistance of a lithium battery including the composite positive electrode active material may be suppressed or reduced.

A content (e.g., amount) of a composite included in the composite positive electrode active material may be 3 wt% or less, 2 wt% or less, 1 wt% or less, 0.5 wt% or less, or 0.2 wt% or less of the total weight of the composite positive electrode active material. The content (e.g., amount) of the composite may be in a range of about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% to about 0.2 wt%, about 0.01 wt% to about 0.1 wt%, or about 0.03 wt% to about 0.07 wt% of the total weight of the composite positive electrode active material. Because the composite positive electrode active material includes the composite in such a range, the cycle characteristics of a lithium battery including the composite positive electrode active material may be further improved.

An average particle diameter (e.g. D50) of at least one selected from the first metal oxide and the second metal oxide included in the complex may be in a range of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. Because the first metal oxide and/or the second metal oxide have a particle diameter in such a nano range, the first metal oxide and/or the second metal oxide may be more uniformly distributed in a graphene matrix of the composite. Therefore, such a composite may be uniformly applied on the core without agglomeration to form the shell. In some embodiments, because the first metal oxide and/or the second metal oxide have having a particle diameter in such a range, the first metal oxide and/or the second metal oxide may be more uniformly provided on the core. Accordingly, the first metal oxide and/or the second metal oxide uniformly may be uniformly provided on the core, thereby more effectively exhibiting withstand voltage characteristics. The average particle diameters of the first metal oxide and the second metal oxide may be measured, for example, through a measurement device utilizing a laser diffraction method or a dynamic light scattering method. An average particle diameter may be measured utilizing a laser scattering particle size distribution meter (for example, LA-920 manufactured by Horiba Corporation) and is a value of a median particle diameter (D50) if (e.g., when) metal oxide particles are accumulated to 50 % from small particles in volume conversion.

The core included in the composite positive electrode active material may include, for example, a lithium transition metal oxide represented by a formula selected from among Formulas 1 to 8.

Formula 1 LiₐCOₓM_{y}O_{2-b}A_{b}

In Formula 1,
1.0≤a≤1.2, 0≤b≤0.2, 0.9≤x≤1, 0≤y≤0.1, x+y=1,

M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and

A may be F, S, Cl, Br, or a combination thereof.

Formula 2 LiₐNiₓCo_{y}M_{z}O_{2-b}A_{b}

In Formula 2,
1.0≤a≤1.2, 0≤b≤0.2, 0.8≤x<1, 0≤y≤0.3, 0<z≤0.3, x+y+z=1,

M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and

A may be F, S, Cl, Br, or a combination thereof.

Formula 3 LiNiₓCo_{y}Mn_{z}O₂

Formula 4 LiNiₓCo_{y}Al_{z}O₂

In Formulas 3 and 4, 0.8≤x≤0.95, 0≤y≤0.2, 0<z≤0.2, and x+y+z=1.

Formula 5 LiNiₓCo_{y}Mn_{z}Al_{w}O₂

In Formula 5, 0.8≤x≤0.95, 0≤y≤0.2, 0<z≤0.2, 0<w≤0.2, and x+y+z+w=1.

Formula 6 LiₐNiₓMn_{y}M'_{z}O_{2-b}A_{b}

In Formula 6,
1.0≤a≤1.2, 0≤b≤0.2, 0<x≤0.3, 0.5≤y<1, 0<z≤0.3, x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and

A may be F, S, Cl, Br, or a combination thereof.

Formula 7 LiₐM1ₓM2_{y}PO_{4-b}X_{b}

In Formula 7, 0.90≤a≤1.1, 0≤x≤0.9, 0≤y≤0.5, 0.9<x+y<1.1, 0≤b≤2,
M1 may be chromium (Cr), manganese (Mn), iron (Fe), cobalt (Co), nickel (Ni), copper (Cu), zirconium (Zr), or a combination thereof,

M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or one or more combinations thereof, and X may be O, F, S, P, or one or more combinations thereof.

Formula 8 LiₐM3_{z}PO₄

In Formula 8, 0.90≤a≤1.1, 0.9≤z≤1.1, and
M3 may be chromium (Cr), manganese (Mn), iron (Fe), cobalt (Co), nickel (Ni), copper (Cu), zirconium (Zr), or a combination thereof.

A content (e.g., amount) of the dry positive electrode active material included in the dry positive electrode mixture may be, for example, in a range of about 80 wt% to about 99 wt%, or about 90 wt% to about 98 wt% based on the total weight of the dry positive electrode mixture.

The dry electrode active material may be, for example, a dry negative electrode active material.

Any negative electrode active material may be utilized as long as the negative electrode active material is utilized as a negative electrode active material of a lithium battery in the art. The negative electrode active material may include, for example, at least one selected from among a lithium metal, a metal alloyable with lithium, a transition metal oxide, a non-transition metal oxide, and a carbon-based material. Examples of the metal alloyable with lithium may include Si, Sn, Al, Ge, Pb, Bi, Sb, a Si-Y alloy (wherein Y is an alkali metal, an alkali earth metal, a Group 13 element, a Group 14 element, a transition metal, a rare earth element, or a combination thereof and is not Si), a Sn-Y alloy (wherein Y is an alkali metal, an alkali earth metal, a Group 13 element, a Group 14 element, a transition metal, a rare earth element, or a combination thereof and is not Sn), and/or the like. Element Y may include, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof). The transition metal oxide may be, for example, lithium titanium oxide, vanadium oxide, lithium vanadium oxide, and/or the like. The non-transition metal oxide may be, for example, SnO₂, SiOₓ (wherein 0<x≤2) and/or the like. The carbon-based material may be, for example, crystalline carbon, amorphous carbon, or a mixture thereof. The crystalline carbon may be, for example, graphite such as non-shaped, plate-shaped, flake-shaped, spherical, or fibrous natural graphite or artificial graphite. The amorphous carbon may be, for example, soft carbon (low-temperature fired carbon) or hard carbon, mesophase pitch carbide, fired coke, and/or the like.

A content (e.g., amount) of the dry negative electrode active material included in a dry negative electrode mixture may be, for example, in a range of 70 wt% to about 99 wt%, about 80 wt% to about 99 wt%, or about 90 wt% to about 98 wt% with respect to the total weight of the dry negative electrode mixture.

Referring to FIG. 6, the dry electrode film 150 according to another embodiment is prepared through the described method of preparing a dry electrode. The dry electrode film 150 may be prepared utilizing second dry binder particles obtained by pulverizing frozen first dry binder particles. The dry electrode film 150 may include a dry electrode active material and a dry binder. In an XRD spectrum of the second dry binder particles and/or an XRD spectrum of the dry binder, a degree of crystallinity, which is a ratio of an area of a (100) crystalline peak at a diffraction angle 2θ of about 18°±1.5° to the total peak area at a diffraction angle 2θ of about 13.5° to about 20°, may be in a range of about 50 % to about 90 %. A content (e.g., amount) of the dry binder of the dry electrode film 150 may be in a range of about 0.1 wt% to about 2 wt% of the total weight of the dry electrode film 150. Elongation at break of the dry electrode film 150 may be 14 % or more. The dry electrode film 150 may be a self-standing film. Because the dry electrode film 150 is a self-supporting film having elongation at break of 14% or more while including the dry binder at 2 wt% or less, durability may be improved. The deterioration of a dry electrode 300 including the dry electrode film 150 during charging/discharging may be suppressed or reduced. Thus, the cycle characteristics of a lithium battery 1000 including the dry electrode 300 may be improved. In the XRD spectrum of the second dry binder particles and/or the XRD spectrum of the dry binder, a degree of crystallinity, which is a ratio of an area of a (100) crystalline peak at a diffraction angle 2θ of about 18°±1.0° to the total peak area at a diffraction angle 2θ of about 15° to about 20°, may be, for example, in a range of about 50 % to about 90 %, about 55 % to about 90 %, about 60 % to about 90 %, about 65 % to about 90 %, about 70 % to about 90 %, about 75 % to about 90 %, or about 80 % to about 90 %.

On the other hand, in a dry electrode film including a dry binder in which a degree of crystallinity, which is a ratio of an area of a (100) crystalline peak at a diffraction angle 2θ of about 18°±1.5° to the total peak area at a diffraction angle 2θ of about 13.5° to about 20° in an XRD spectrum, does not satisfy a range of about 50 % to about 90 %, at a dry binder content (e.g., amount) of 2 wt% or less, elongation at break of the dry electrode film may be less than 14%, and/or a self-standing film may not be formed. The deterioration of a dry electrode including such a dry electrode film during charging/discharging may be accelerated. Accordingly, the cycle characteristics of a lithium battery including such a dry electrode may be deteriorated.

A dry electrode film of the disclosure may include a dry electrode active material and a dry binder, and a content (e.g., amount) of the dry binder may be, for example, in a range of about 0.1 wt% to about 2 wt%, about 0.5 wt% to about 2 wt%, or about 1 wt% to about 2 wt% of the total weight of the dry electrode film. Second elongation at break of the dry electrode film may be, for example, 14 % or more, 16 % or more, or 18 % or more (e.g. about 20% or more, or about 22% or more). The second elongation at break of the dry electrode film may be, for example, in a range of about 14 % to about 50 %, about 16 % to about 40 %, or about 18 % to about 30 % (e.g. about 20 % to about 30 %, or about 22 % to about 30 %). Second tensile strength at break of the dry electrode film may be, for example, 0.5 newton per square millimeter (N/mm²) or more, 0.6 N/mm² or more, or 0.7 N/mm² or more (e.g. 0.8 N/mm² or more, 0.9 N/mm² or more, 1.0 N/mm² or more, or 1.01 N/mm² or more). The second tensile strength at break of the dry electrode film may be, for example, in a range of about 0.5 N/mm²to about 10 N/mm², about 0.6 N/mm²to about 5 N/mm², about 0.7 N/mm²to about 3 N/mm², about 0.7 N/mm² to about 2 N/mm², or about 0.7 N/mm² to about 1.5 N/mm² (e.g. about 0.8 N/mm² to about 1.5 N/mm², about 0.9 N/mm² to about 1.5 N/mm², about 1.0 N/mm² to about 1.5 N/mm², or about 1.01 N/mm² to about 1.5 N/mm²). For more specific details on the physical properties of the dry electrode film, the above described method of preparing a dry electrode film is referred to.

The dry electrode film may include the dry electrode active material, and for the dry electrode active material, the above described method of preparing a dry electrode film is referred to.

The dry electrode film may further include, for example, a dry conductive material. For the dry conductive material, the above described method of preparing a dry electrode film is referred to.

The dry electrode film may further include, for example, dry binder particles. Such dry binder particles may be second dry binder particles that are partially fibrillized or not fibrillized although utilized in a process of preparing a dry electrode film. A particle diameter (e.g. average particle diameter, such as D50) of the dry binder particles remaining in the dry electrode film may be, for example, 100 µm or less, 90 µm or less, 70 µm or less, 60 µm or less, 50 µm or less, 40 µm or less, or 30 µm or less. The particle diameter (e.g. average particle diameter, such as D50) of the dry binder particles remaining in the dry electrode film may be, for example, in a range of about 1 µm to about 100 µm, about 1 µm to about 90 µm, about 1 µm to about 70 µm, about 1 µm to about 60 µm, about 1 µm to about 50 µm, about 1 µm to about 40 µm, or about 1 µm to about 30 µm (e.g. about 2 µm to about 100 µm, about 2 µm to about 90 µm, about 2 µm to about 70 µm, about 2 µm to about 60 µm, about 2 µm to about 50 µm, about 2 µm to about 40 µm, or about 2 µm to about 30 µm; about 5 µm to about 100 µm , about 5 µm to about 90 µm , about 5 µm to about 70 µm , about 5 µm to about 60 µm, about 5 µm to about 50 µm, about 5 µm to about 40 µm, or about 5 µm to about 30 µm). The dry binder particles and/or fibrillized dry binder present in the dry electrode film may be identified, for example, a SEM, a TEM, a high-angle annular dark field image (HAADF) SEM, energy dispersive X-ray spectroscopy (EDS), and/or the like. For example, the dry binder particles and/or fibrillized dry binder present in the dry electrode film may be identified from a HAADF SEM image and/or an EDS mapping image.

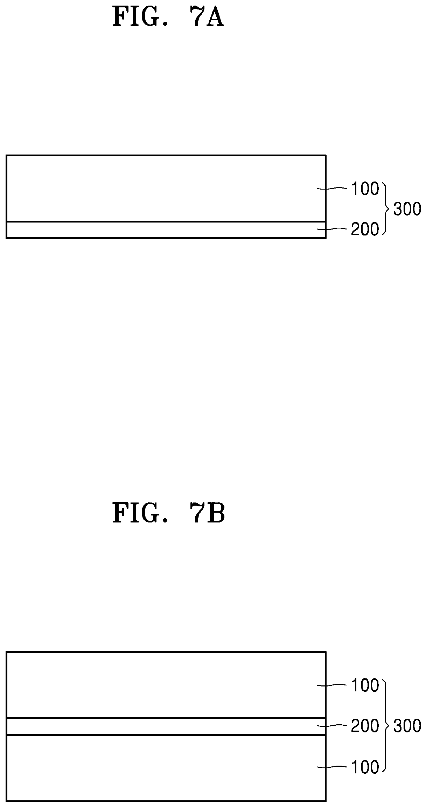

Referring to FIGS. 7A to 10, a dry electrode 300 according to another embodiment may include a dry electrode active material layer 100, and an electrode current collector 200 provided on one surface of the dry electrode active material layer 100 or provided between the one surface and the other surface opposite to the one surface, wherein the dry electrode active material layer 100 includes the described dry electrode film. Because the dry electrode 300 includes the dry electrode film having improved mechanical properties, the deterioration of the dry electrode 300 during charging/discharging may be suppressed or reduced. The cycle characteristics of a lithium battery including the dry electrode 300 may be improved.

Referring to FIGS. 7A and 7B, the dry electrode 300 may include the electrode current collector 200, and the dry electrode active material layer 100 provided on at least one surface (e.g., provided on one surface or two (e.g., opposite) surfaces) of the electrode current collector 200. The dry electrode active material layer 100 may be, for example, the described dry electrode film.

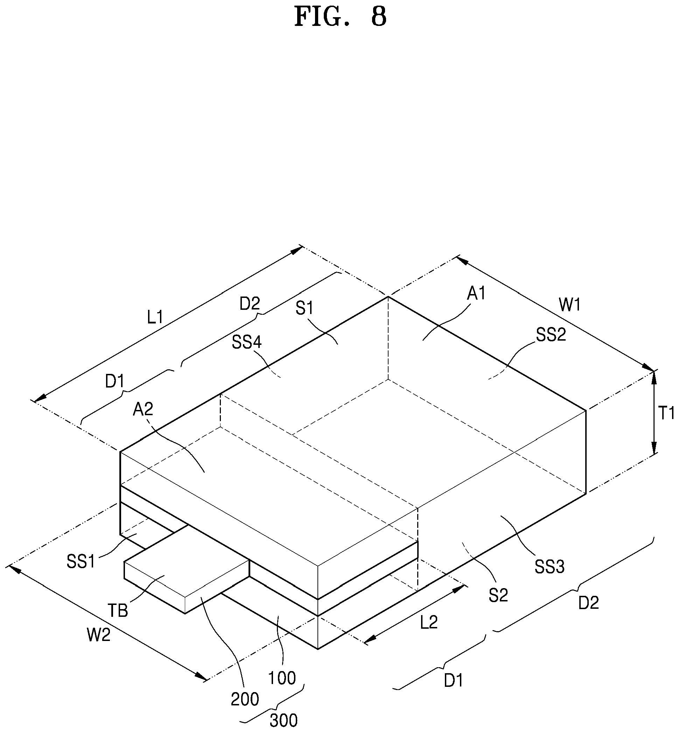

Referring to FIGS. 8 to 10, in the dry electrode 300, for example, the electrode current collector 200 may be provided on a portion of one surface of the dry electrode active material layer 100 or only on a portion between two (e.g., facing or opposing) surfaces of the dry electrode active material layers 100. Because the electrode current collector 200 is provided on a portion of one surface of the electrode active material layer 100 or on a portion between two (e.g., facing or opposing) surfaces of the electrode active material layer(s) 100, a volume occupied by the electrode current collector 200 in an electrode may be reduced. Accordingly, the energy density of a lithium battery including the electrode, which includes the electrode current collector 200 having a reduced volume, may be improved. Accordingly, a lithium battery providing improved output power may be provided. The dry electrode active material layer 100 may be, for example, the described dry electrode film.

The dry electrode 300 may include, for example, a first domain D1 (Domain 1) including the electrode active material layer 100 and the electrode current collector 200 provided on one surface or between two (e.g., facing or opposing) surfaces of the electrode active material layer(s) 100, and a second domain D2 (Domain 2) which includes the electrode active material layer 100 in which the electrode current collector 200 is absent on one surface or between two (e.g., facing or opposing) surfaces of the electrode active material layer(s) 100.

An electrode in which the electrode current collector 200 is provided on a portion of one surface of the electrode active material layer 100 or only on a portion between two surfaces of the electrode active material layer 100 may be, for example, a stretchable electrode. The stretchable electrode may be stretchable in at least one direction selected from a length direction and a transverse direction of the stretchable electrode. The stretchable electrode may be stretchable by, for example, 5 % or more, 10 % or more, 15 % or more, 20 % or more, 30 % or more, 40 % or more, or 50 % or more in the length direction of the electrode. The stretchable electrode may be stretched by, for example, a range of about 5 % to about 100 %, about 10 % to about 100 %, about 15 % to about 100 %, about 20 % to about 100 %, about 30 % to about 100 %, about 40 % to about 100 %, or about 50 % to about 100 % in the length direction of the electrode. The stretchable electrode may be stretched by, for example, 5 % or more, 10 % or more, 1 5% or more, 20 % or more, 30 % or more, 40 % or more, or 50 % or more in the transverse direction of the electrode. The stretchable electrode may be stretched by, for example, a range of about 5 % to about 100 %, about 10 % to about 100 %, about 15 % to about 100 %, about 20 % to about 100 %, about 30 % to about 100 %, about 40 % to about 100 %, or about 50 % to about 100 % in the transverse direction of the electrode. For example, even after being stretched, the stretchable electrode may be restored to its initial length without cracks and/or the like occurring in the electrode, and even if (e.g., when) such a cycle is repeated a plurality of times, cracks and/or the like may not occur in the electrode. The stretchable electrode may include, for example, the electrode current collector 200 only in the first domain and does not include the electrode current collector 200 in the second domain so that the second domain may be easily stretched. In some embodiments, because the electrode current collector 200 is provided only at a portion of the electrode, even if (e.g., when) a plurality of electrodes are stacked and then bent, detachment of the electrode active material layer 100 and the electrode current collector 200 may be minimized or reduced, and one or more suitable types (kinds) of lithium batteries may be easily implemented.

Referring to FIG. 8, the dry electrode 300 may include the electrode active material layer 100 including an electrode active material and a binder, and the electrode current collector 200 provided on a portion between two surfaces of the electrode active material layer 100. The dry electrode 300 may include the first domain D1 and the second domain D2. The first domain D1 may be a domain including the electrode active material layer 100 and the electrode current collector 200 provided between two surfaces of the electrode active material layer 100. The first domain D1 may be a domain including the electrode current collector 200 and the electrode active material layer 100 provided on two (e.g., opposite) surfaces of the electrode current collector 200 in a thickness direction of the electrode. The second domain D2 may be a domain which includes the electrode active material layer 100 and does not include the electrode current collector 200 provided between two surfaces of the electrode active material layer 100. For example, the second domain D2 may be the remaining electrode active material layer region excluding the first domain D1. The first domain D1 and the second domain D2 included in the dry electrode 300 may have substantially the same thickness T1.

Referring to FIG. 8, the dry electrode 300 may include the electrode active material layer 100, wherein the electrode active material layer 100 has a first surface S1 and a second surface S2 opposite to the first surface, has a first side surface SS1 connected to ends of the first surface S1 and the second surface S2 in a length direction and a second side surface SS2 opposite to the first side surface SS1, and has a third side surface SS3 connected to ends of the first surface S1 and the second surface S2 in a transverse direction and a fourth side surface SS4 opposite to the third side surface SS3. The first domain D1 may be a domain which is defined by the first surface S1, the second surface S2, the third side surface SS3, and the fourth side surface SS4 and includes the electrode current collector 200 provided between the first surface S1 and the second surface S2. The second area D2 may be a domain which is defined by the first surface S1, the second surface S2, the third side surface SS3, and the fourth side surface SS4 and in which the electrode current collector 200 is absent between the first surface S1 and the second surface S2. The first domain D1 and the second domain D2 included in the dry electrode 300 may have substantially the same thickness T1.

Referring to FIG. 8, the electrode active material layer 100 may have a first area A1 defined by a first distance L1 in the length direction and a first distance W1 in the transverse direction, the electrode current collector 200 may be provided between the first surface S1 and the second surface S2 and may have a second area A2 defined by a second distance L2 in the length direction and a second distance W2 in the transverse direction, and the second area A2 of the electrode current collector 200 may be 90 % or less of the first area A1 of the electrode active material layer 100. For example, the second area A2 of the electrode current collector 200 may be in a range of about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 % of the first area A1 of the electrode active material layer 100. Because an area of the electrode current collector 200 in the electrode 300 is smaller than that of the electrode active material layer 100, the energy density of a lithium battery adopting the dry electrode 300 may be further improved.

Referring to FIG. 8, the second distance L2 of the electrode current collector 200 in the length direction may be, for example, 90 % or less, 80 % or less, 70 % or less, 60 % or less, 50 % or less, 40 % or less, 30 % or less, or 20 % or less of the first distance L1 of the electrode active material layer 100 in the length direction. The second distance L2 of the electrode current collector 200 in the length direction may be, for example, in a range of about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 % of the first distance L1 of the electrode active material layer 100 in the length direction. The second distance W2 of the electrode current collector 200 in the transverse direction may be, for example, 100 % or less, 90 % or less, 80 % or less, 70 % or less, 60 % or less, 50 % or less, 40 % or less, 30 % or less, or 20 % or less of the first distance W1 of the electrode active material layer 100 in the transverse direction. The second distance W2 of the electrode current collector 200 in the transverse direction may be, for example, in a range of about 1 % to about 100 %, about 5 % to about 90 %, about 10 % to about 80 %, about 10 % to about 70 %, about 10 % to about 60 %, about 10 % to about 50 %, about 10 % to about 40 %, about 10 % to about 30 %, or about 10 % to about 20 % of the first distance W1 of the electrode active material layer 100 in the transverse direction. The second distance L2 of the electrode current collector 200 in the length direction may be, for example, 90 % or less or 50 % or less of the first distance L1 of the electrode active material layer 100 in the length direction, and the second distance W2 of the electrode current collector 200 in the transverse direction may be, for example, 90 % or less or 50 % or less of the first distance W1 of the electrode active material layer 100 in the transverse direction. Because the electrode current collector 200 has such a size, the energy density of a lithium battery adopting the dry electrode 300 may be further improved.

Referring to FIG. 8, the electrode current collector 200 may be exposed on up to three side surfaces among the first side surface SS1, the second side surface SS2, the third side surface SS3, and the fourth side surface SS4 included in the electrode active material layer 100. Because the electrode current collector 200 has a smaller area than the electrode active material layer 100, the electrode current collector 200 may be exposed on some side surfaces among the side surfaces included in the electrode active material layer 100, for example, three side surfaces, two side surfaces, or one side surface. If (e.g., when) the number of side surfaces of the electrode active material layer 100, on which the electrode current collector 200 are exposed, is decreased, a possibility of a short circuit occurring through the side surfaces of the electrode active material layer 100 may be reduced, thereby improving the safety of a lithium battery adopting such a dry electrode 300.

Referring to FIG. 8, the electrode current collector 200 may further include a tab TB extending to the outside of the active material layer 100 through up to two side surfaces selected from among the first side surface SS1, the second side surface SS2, the third side surface SS3, and the fourth side surface SS4. For example, the tab TB may extend to the outside of the electrode active material layer 100 through the first side surface SS1 and/or the second side surface SS2. In some embodiments, the tab TB may extend to the outside of the electrode active material layer 100 through the third side surface SS3 and/or the fourth side surface SS4. Because the tab TB extends to the outside of the electrode active material layer 100 through one side surface or two opposite side surfaces, a short circuit caused by a plurality of adjacent tabs TB may be prevented or reduced.

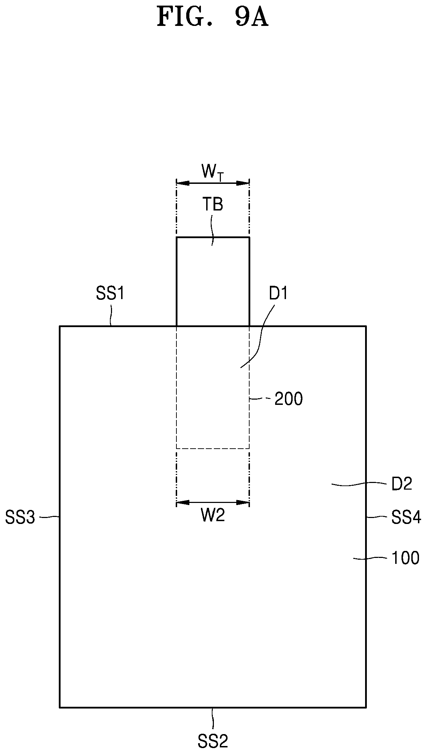

Referring to FIGS. 9A to 9F, in the electrode 300 according to the disclosure, the electrode current collector 200 provided at a portion between two surfaces of the electrode active material layer 100 may have one or more suitable shapes and may be provided at any one of one or more suitable positions in the electrode active material layer 100. In FIGS. 9A to 9F, a region in which the electrode current collector 200 is provided in the electrode active material layer 100 defined by a first side surface SS1, a second side surface SS2, a third side surface SS3, and a fourth side surface SS4 may correspond to the first domain D1, and a region in which the electrode current collector 200 is not provided may correspond to the second domain D2. The first domain D1 may be a domain which includes the electrode active material layer 100 and the electrode current collector 200 provided on one surface or between two (e.g., facing or opposing) surfaces of the electrode active material layer(s) 100. The first domain D1 may be a domain including the electrode current collector 200 and the electrode active material layer 100 provided on one surface or two (e.g., opposite) surfaces of the electrode current collector 200 in the thickness direction of the electrode. The second domain D2 may be a domain which includes the electrode active material layer 100 and does not include the electrode current collector 200 provided on one surface or between two surfaces of the electrode active material layer 100. The second domain D2 may be the remaining electrode active material layer region excluding the first domain D1.

Referring to FIG. 9A, the electrode current collector 200 may be provided at a portion of the electrode active material layer 100 defined by the first side surface SS1, the second side surface SS2, the third side surface SS3, and the fourth side surface SS4. The electrode current collector 200 may include a tab TB exposed on the first side surface SS1 of the electrode active material layer 100 and extending to the outside of the electrode active material layer 100 through the first side surface SS1. A distance W_{T} of the tab TB in the transverse direction may be about 100 % of a second distance W2 of the electrode current collector 200 in the transverse direction.

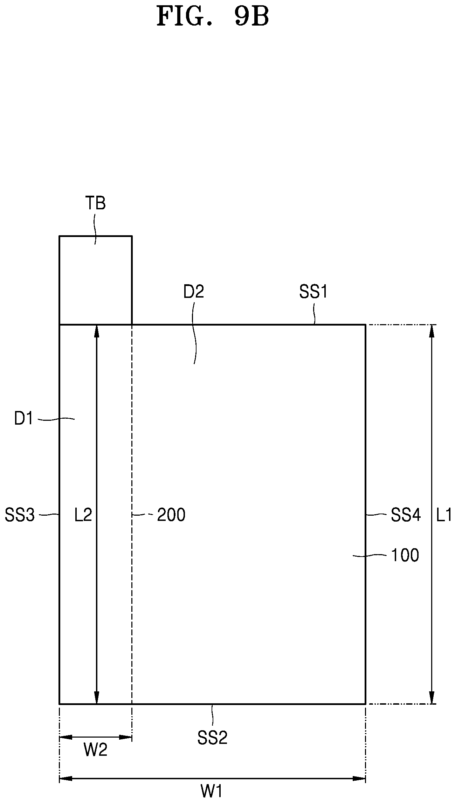

Referring to FIG. 9B, the electrode current collector 200 may be provided at a portion of the electrode active material layer 100 defined by the first side surface SS1, the second side surface SS2, the third side surface SS3, and the fourth side surface SS4. The electrode current collector 200 may include a tab TB exposed on the first side surface SS1, the second side surface SS2, and the third side surface SS3 of the electrode active material layer 100 and extending to the outside of the electrode active material layer 100 through the first side surface SS1. A second distance L2 of the electrode current collector 200 in the length direction may be about 100 % of a first distance L1 of the electrode active material layer 100 in the length direction. The second distance W2 of the electrode current collector 200 in the transverse direction may be less than about 100 % of the first distance W1 of the electrode active material layer 100 in the transverse direction.

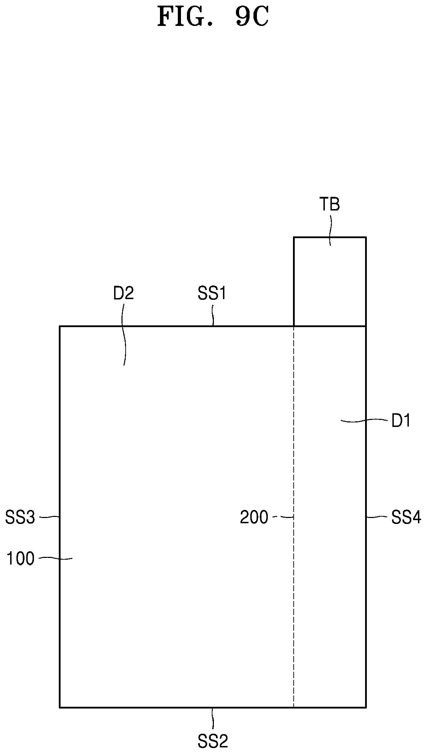

Referring to FIG. 9C, the electrode current collector 200 may be provided at a portion of the electrode active material layer 100 defined by the first side surface SS1, the second side surface SS2, the third side surface SS3, and the fourth side surface SS4. The electrode current collector 200 may include a tab TB exposed on the first side surface SS1, the second side surface SS2, and the fourth side surface SS4 of the electrode active material layer 100 and extending to the outside of the electrode active material layer 100 through the first side surface SS1.

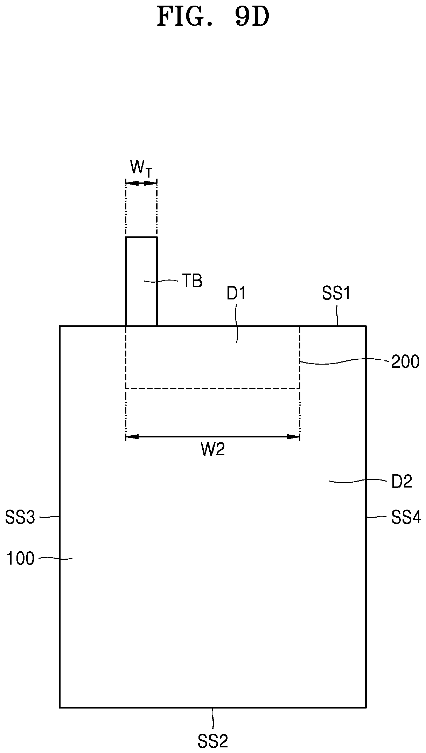

Referring to FIG. 9D, the electrode current collector 200 may be provided at a portion of the electrode active material layer 100 defined by the first side surface SS1, the second side surface SS2, the third side surface SS3, and the fourth side surface SS4. The electrode current collector 200 may include a tab TB exposed on the first side surface SS1 of the electrode active material layer 100 and extending to the outside of the electrode active material layer 100 through the first side surface SS1. A distance W_{T} of the tab TB in the transverse direction may be less than 100 % of the second distance W2 of the electrode current collector 200 in the transverse direction.

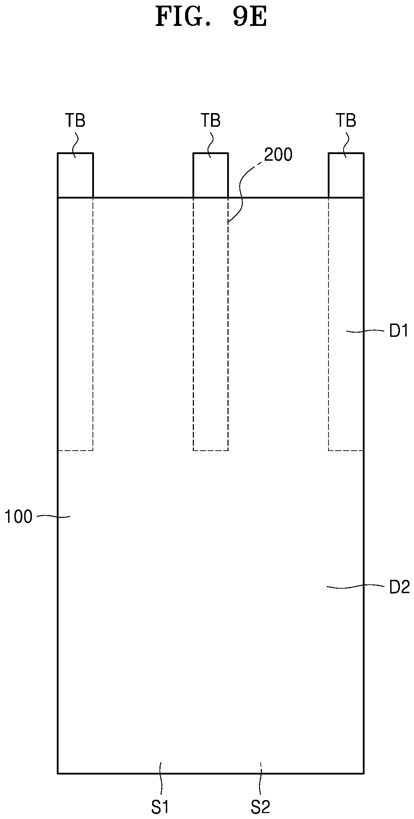

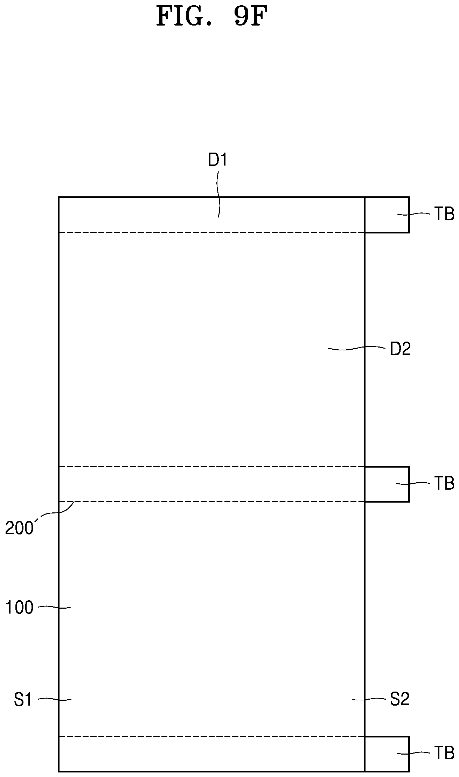

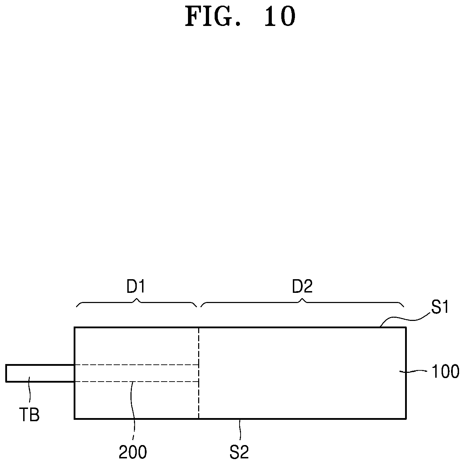

Referring to FIGS. 9E, 9F, and 10, a plurality of electrode current collectors 200 may be provided at portions of the electrode active material layer 100 defined by the first side surface SS1, the second side surface SS2, the third side surface SS3, and the fourth side surface SS4. The dry electrode 300 may include the plurality of electrode current collectors 200 spaced and/or apart from each other in the length direction or transverse direction of the electrode active material layer 100. The plurality of electrode current collectors 200 may be, for example, spaced from each other by the same interval or different intervals. The plurality of electrode current collectors 200 may form an angle of 45 degrees or less, 40 degrees or less, 30 degrees or less, 25 degrees or less, 20 degrees or less, 15 degrees or less, 10 degrees or less, or 5 degrees or less with one surface of the electrode active material layer 100, for example, at least one of a first surface S1 and a second surface S2. For example, the plurality of electrode current collectors 200 may form an angle of 0 degrees with one surface of the electrode active material layer 100, that is, may be provided in parallel to the one surface of the electrode active material layer 100. The plurality of electrode current collectors 200 may be provided, for example, between the first surface S1 and the second surface S2 of the electrode active material layer 100.

Referring to FIG. 10, the electrode active material layer 100 may include the first domain D1 in which the electrode current collector 200 is provided between the first surface S1 and the second surface S2, and the second domain D2 in which the electrode current collector 200 is not provided between the first surface S1 and the second surface S2. A mixture density of the electrode active material layer 100 included in the second domain D2 may be, for example, less than 99 %, 98% or less, 97% or less, 96% or less, 95% or less, or 90% or less of a mixture density of the electrode active material layer 100 included in the first domain D1. The mixture density of the electrode active material layer 100 included in the second domain D2 may be, for example, in a range of about 50 % to less than about 99 %, about 60 % to about 98 %, about 70 % to about 97%, about 80 % to about 96%, or about 90 % to about 95% of the mixture density of the electrode active material layer 100 included in the first domain D1. Because the first domain D1 includes the electrode current collector 200 during rolling of the electrode active material layer 100, the mixture density of the electrode active material layer 100 included in the first domain D1 may be higher than the mixture density of the electrode active material layer 100 included in the second domain D2.

Referring to FIG. 7A, if (e.g., when) the dry electrode 300 is measured utilizing a surface and interfacial measuring analysis system (SAICAS), a change ratio of a vertical relative binding force F_{VR} according to a depth from a first point spaced and/or apart from a surface of the dry electrode active material layer 100 by 5 % of the total thickness of the dry electrode active material layer 100 in a direction of the electrode current collector 200 to a second point spaced and/or apart from a surface of the electrode current collector 200 by 5 % of the total thickness of the dry electrode active material layer 100 may be 300 % or less, or 200 % or less. The change ratio of the vertical relative binding force F_{VR} may be, for example, in a range of about 10 % to about 300 %, about 10 % to about 250 %, about 10 % to about 200 %, about 10 % to about 150 %, or about 10 % to about 100 %. The second point spaced and/or apart from the surface of the electrode current collector 200 in the direction of the electrode active material layer 100 by 5 % of the total thickness of the dry electrode active material layer 100 may be correspond to a point spaced and/or apart from the surface of the electrode active material layer 100 in the direction of the electrode current collector 200 by 95 % of the total thickness of the dry electrode active material layer 100. A vertical relative binding force may be calculated from Equation 1. For a SAICAS measurement method, for example, Evaluation Example 3 is referred to. change ratio of vertical relative binding force FVR = [(maximum value FVR1 of vertical relative binding force - minimum value FVR2 of vertical relative binding force)/minimum value FVR2 of vertical relative binding force)] × 100

In the dry electrode 300, if (e.g., when) measurement is performed utilizing the SAICAS, because the change ratio of the vertical relative binding force F_{VR} is 200 % or less, the uniformity of the distribution of components may be improved in the dry electrode 300. In some embodiments, because side reactions and an increase in internal resistance due to non-substantially uniform distribution of the components in the dry electrode active material layer 100 are suppressed or reduced, the reversibility of electrode reactions may be improved. Accordingly, the cycle characteristics of a lithium battery may be improved even in the case of the dry electrode 300 having high loading. Because the dry electrode 300 includes an interlayer, a binding force between the electrode active material layer 100 and the electrode current collector 200 may be additionally improved, and the internal resistance of the electrode may be reduced. Accordingly, the cycle characteristics of a lithium battery employing such a dry electrode 300 may be improved.

Referring to FIG. 7A, if (e.g., when) the dry electrode 300 is measured utilizing the SAICAS, a horizontal binding force ratio of a first horizontal binding force F_{HA1} at a first point spaced and/or apart from the surface of the dry electrode active material layer 100 in the direction of the electrode current collector 200 by 10 % of the total depth from the surface of the dry electrode active material layer 100 to the surface of the electrode current collector 200 to a second horizontal binding force F_{HA2} at a second point spaced and/or apart from the surface of the electrode current collector 200 in the direction (for example, a depth direction) of the electrode active material layer 100 by 10 % of the total depth from the surface of the dry electrode active material layer 100 to the surface of the electrode current collector 200 may be 50 % or more. The horizontal binding force ratio may be, for example, in a range of about 50 % to about 100 %, about 60 % to about 100 %, about 70 % to about 100 %, about 80 % to about 100 %, or about 90 % to about 100 %. The second point spaced and/or apart from the surface of the electrode current collector 200 in the direction of the electrode active material layer 100 by 10 % of the total thickness of the dry electrode active material layer 100 may be correspond to a point spaced and/or apart from the surface of the electrode active material layer 100 in the direction of the electrode current collector 200 by 90 % of the total thickness of the dry electrode active material layer 100. The horizontal binding force ratio may be represented, for example, by Equation 2. For a SAICAS measurement method, for example, Evaluation Example 4 is referred to. horizontal binding force ratio = [second horizontal binding force FH2/first horizontal binding force FH1] × 100

During SAICAS measurement, if (e.g., when) a horizontal binding force ratio is 50 % or more, the uniformity of the distribution of components in an electrode may be further improved. If (e.g., when) the electrode has a horizontal binding force ratio in such a range, the cycle characteristics of a lithium battery adopting such an electrode may be further improved.

Referring to FIGS. 7A to 10, as a material constituting the electrode current collector 200, any material, which does not react with lithium, that is, any material, which does not form an alloy or compound with lithium and has conductivity (e.g., is a conductor), may be utilized. A metal substrate may be, for example, a metal or alloy. The metal substrate may be made of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The electrode current collector 200 may have a form selected from among, for example, a sheet, a foil, a film, a plate, a porous body, a mesoporous body, a through-hole-containing body, a polygonal ring body, a mesh body, a foam body, and a nonwoven body, but one or more embodiments are not necessarily limited to the form. Any form utilized in the art may be utilized.

The electrode current collector 200 may have a thickness that is reduced as compared with an electrode current collector 200 included in an electrode of a related art. Therefore, by including a thin film current collector, an electrode according to the disclosure is distinguished from an electrode of a related art including a thick film current collector. Because an electrode according to one or more embodiments adopts a thin film current collector having a reduced thickness, a thickness of an electrode active material layer in the electrode including the thin film current collector may be relatively increased. As a result, the energy density of a lithium battery adopting such an electrode may be increased. A thickness of the electrode current collector 200 including the metal substrate and the interlayer may be, for example, at most or less than 15 µm, at most or less than 14.5 µm, or at most or less than 14 µm. The thickness of the electrode current collector 200 may be, for example, in a range of about 0.1 µm to about less than 15 µm, about 1 µm to about 14.5 µm, about 2 µm to about 14 µm, about 3 µm to about 14 µm, about 5 µm to about 14 µm, or about 10 µm to about 14 µm.

As a material constituting the electrode current collector 200, any material, which does not react with lithium, that is, any material, which does not form an alloy or compound with lithium and has conductivity (e.g., is a conductor), may be utilized. The electrode current collector 200 may include, for example, a metal or an alloy. The electrode current collector 200 may be made of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof.

The electrode current collector 200 may have a form selected from among, for example, a sheet, a foil, a film, a plate, a porous body, a mesoporous body, a through-hole-containing body, a polygonal ring body, a mesh body, a foam body, and a nonwoven body, but one or more embodiments are not necessarily limited to the form. Any form utilized in the art may be utilized.

In one or more embodiments, the electrode current collector 200 may include, for example, a base film and a metal layer provided on one surface or two surfaces of the base film. The electrode current collector 200 may include a substrate, and the substrate may have a structure including, for example, a base film and a metal layer provided on one surface or two (e.g., opposite) surfaces of the base film. The described interlayer may be additionally provided on the metal layer. The base film may include, for example, a polymer. The polymer may be, for example, a thermoplastic polymer. The polymer may include, for example, polyethylene terephthalate (PET), polyethylene (PE), PP, polybutylene terephthalate (PBT), polyimide (PI), or a combination thereof. Because the base film includes the thermoplastic polymer, if (e.g., when) a short circuit occurs, the base film may be melted to suppress or reduce a rapid increase in current. The base film may be, for example, an insulator. The metal layer may include, for example, copper (Cu), stainless steel, titanium (Ti), iron (Fe), cobalt (Co), nickel (Ni), or an alloy thereof. The metal layer may serve as an electrochemical fuse to be cut if (e.g., when) an overcurrent occurs, thereby performing a short circuit prevention function. A thickness of the metal layer may be adjusted to adjust a limit current and a maximum current. The metal layer may be plated or deposited on the base film. If (e.g., when) the thickness of the metal layer is reduced, a limit current and/or a maximum current of the electrode current collector 200 may be decreased, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer is melted during welding, the metal layer may be electrically connected to the lead tab. In order to more strongly weld the metal layer and the lead tab, a metal chip may be added between the metal layer and the lead tab. The metal chip may be a flake made of the same material as a metal of the metal layer. The metal chip may be, for example, a metal foil or a metal mesh. The metal chip may be, for example, an aluminium foil, a copper foil, or a SUS (e.g., stainless steel) foil. If (e.g., when) the metal chip is provided on the metal layer and then welded to the lead tab, the lead tab may be welded to the metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, a range of about 1 µm to 50 µm, about 1.5 µm to about 50 µm, about 1.5 µm to about 40 µm, or about 1 µm to about 30 µm. Because the base film has a thickness in such a range, a weight of an electrode may be more effectively reduced. A melting point of the base film may be, for example, in a range of about 100 °C to about 300 °C, about 100 °C to about 250 °C, or about 100 °C to about 200 °C. Because the base film has a melting point in such a range, the base film may be melted and easily coupled to the lead tab in a process of welding the lead tab. In order to improve adhesive strength between the base film and the metal layer, surface treatment such as corona treatment may be performed on the base film. A thickness of the metal layer may have, for example, in a range of about 0.01 µm to about 3 µm, about 0.1 µm to about 3 µm, about 0.1 µm to about 2 µm, or about 0.1 µm to about 1 µm. Because the metal layer has a thickness in such a range, the stability of an electrode may be secured while conductivity is maintained. A thickness of the metal chip may have, for example, in a range of about 2 µm to about 10 µm, about 2 µm to about 7 µm, or about 4 µm to about 6 µm. Because the metal chip has a thickness in such a range, the metal layer and the lead tab may be more easily connected. Because the electrode current collector 200 has such a structure, a weight of an electrode may be reduced, thereby improving an energy density. The electrode current collector 200 may be, for example, a positive electrode current collector. The electrode current collector 200 may be, for example, a negative electrode current collector.

The dry electrode 300 may further include an interlayer provided between the dry electrode active material layer 100 and the electrode current collector 200.

The interlayer may be directly provided, for example, on at least one surface (e.g., on one surface or two surfaces) of the electrode current collector 200. Other layers may not be provided between the electrode current collector 200 and the interlayer. The interlayer may be directly provided on at least one surface (e.g., on one surface or two surfaces) of the electrode current collector 200, thereby further improving a binding force between the substrate and the electrode active material layer 100.

A thickness of the interlayer may be, for example, 30% or less of the thickness of the electrode current collector 200. The thickness of the interlayer may be, for example, in a range of about 0.01 % to about 30 %, about 0.1 % to about 30 %, about 0.5 % to about 30 %, about 1 % to about 25 %, about 1 % to about 20%, about 1 % to about 15 %, about 1 % to about 10 %, about 1 % to about 5 %, or about 1 % to about 3 % of the thickness of the electrode current collector 200. The thickness of the interlayer may be, for example, in a range of about 10 nm to about 5 µm, about 50 nm to about 5 µm, about 200 nm to about 4 µm, about 500 nm to about 3 µm, about 500 nm to about 2 µm, about 500 nm to about 1.5 µm, or about 700 nm to about 1.3 µm. Because the interlayer has a thickness in such a range, a binding force between the electrode current collector 200 and the electrode active material layer 100 may be further improved, and an increase in interfacial resistance may be suppressed or reduced.

The interlayer may include, for example, a binder. Because the interlayer includes the binder, a binding force between the electrode current collector 200 and the electrode active material layer 100 may be further improved. The binder included in the interlayer may be, for example, a conductive binder or a non-conductive binder.

The conductive binder may include, for example, an ion-conductive binder and/or an electron-conductive binder. A binder having both (e.g., simultaneously) ion conductivity and electron conductivity may belong to an ion-conductive binder and may also belong to an electron-conductive binder.

Examples of the ion-conductive binder may include poly(styrene sulfonate) (PSS), a PVDF-HFP copolymer, polyvinyl fluoride (PVF), PVDF, poly(methylmethacrylate) (PMMA), polyethylene oxide (PEO), polyethylene glycol (PEG), polyacrylonitrile (PAN), PTFE, polyethylenedioxythiophene (PEDOT), polypyrrole (PPY), polyaniline, and polyacetylene. The ion-conductive binder may include a polar functional group. Examples of the ion-conductive binder including a polar functional group may include Nafion, Aquivion, Flemion, Gore, Aciplex, Morgane ADP, sulfonated poly(ether ether ketone) (SPEEK), sulfonated poly(arylene ether ketone sulfone) (SPAEKKS), sulfonated poly(aryl ether ketone) (SPAEK), poly[bis(benzimidazobenzisoquinolinones)] (SPBIBI), PSS, lithium 9,10-diphenylanthracene-2-sulfonate (DPASLi⁺), and/or the like. Examples of the electron-conductive binders may include polyacetylene, polythiophene, polypyrrole, poly(p-phenylene), poly(phenylenevinylene), poly(phenylenesulfide), polyaniline, and/or the like. The interlayer may be, for example, a conductive layer including a conductive polymer.

The binder included in the interlayer may be selected from among, for example, binders included in the electrode active material layer 100. The interlayer may include the same binder as the electrode active material layer 100. The binder included in the interlayer may be, for example, a fluorine-based binder. The fluorine-based binder included in the interlayer may include, for example, PVDF. The interlayer may be provided on the electrode current collector 200, for example, in a dry type or kind or wet type or kind. The interlayer may be, for example, a binding layer including a binder.

The interlayer may additionally include, for example, a carbon-based conductive material. The carbon-based conductive material included in the interlayer may be selected from carbon-based conductive materials included in the electrode active material layer 100. The interlayer may include the same carbon-based conductive material as the electrode active material layer 100. Because the interlayer includes the carbon-based conductive material, the interlayer may be, for example, a conductive layer. The interlayer may be, for example, a conductive layer including a binder and a carbon-based conductive material.

The interlayer may be provided on the electrode current collector 200 in a dry type or kind, for example, through chemical vapor deposition (CVD), physical vapor deposition (PVD), and/or the like. The interlayer may be provided on the electrode current collector 200 in a wet type or kind, for example, through spin coating, dip coating, and/or the like. The interlayer may be provided on the electrode current collector 200 by, for example, depositing a carbon-based conductive material on the electrode current collector 200 through deposition. The dry-coated interlayer may be made of a carbon-based conductive material and may not include (e.g., may exclude) a (e.g., any) binder. In some embodiments, the interlayer may be provided on the electrode current collector 200 by, for example, applying a composition including a carbon-based conductive material, a binder, and a solvent on a surface of the electrode current collector 200 and drying the composition. The interlayer may have a single-layer structure or a multi-layer structure including a plurality of layers.

According to another embodiment, a lithium battery may include a positive electrode, a negative electrode, and an electrolyte provided between the positive electrode and the negative electrode, wherein at least one of the positive electrode and the negative electrode is a dry electrode 300. The dry electrode 300 may include the described dry electrode film 150.

Because the lithium battery includes at least one of the positive electrode and the negative electrode including the described dry electrode film 150, the cycle characteristics of the lithium battery may be improved.

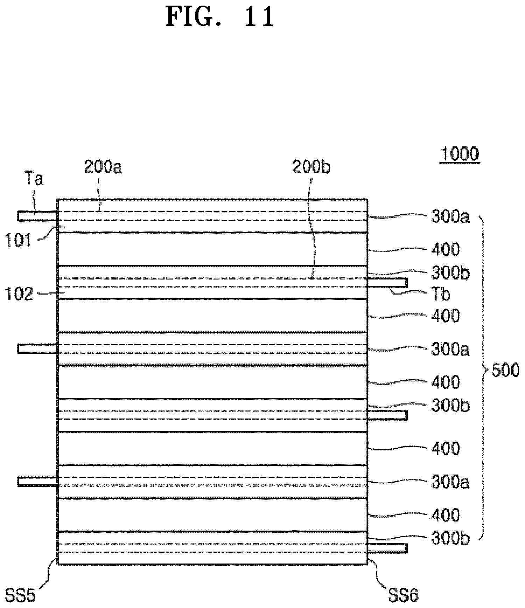

Referring to FIGS. 11 to 13, a lithium battery 1000 may include a positive electrode 300a; a negative electrode 300b, and an electrolyte 400 provided between the positive electrode 300a and the negative electrode 300b, wherein at least one of the positive electrode 300a and the negative electrode 300b is the described electrode. The lithium battery 1000 may include an electrode assembly 500.

Referring to FIG. 11, the electrode assembly 500 may include a plurality of positive electrodes 300a stacked in a thickness direction, a plurality of negative electrodes 300b provided between the plurality of positive electrodes 300a, and a plurality of electrolytes 400 provided between the plurality of positive electrodes 300a and the plurality of negative electrodes 300b. The positive electrode 300a may include a positive electrode current collector 200a, the positive electrode current collector 200a may include a positive electrode tab Ta extending to the outside of a positive electrode active material layer 101 through one side surface SS5 of the electrode assembly 500, the negative electrode 300b may include a negative electrode current collector 200b, and the negative electrode current collector 200b may include a negative electrode tab Tb extending to the outside of a negative electrode active material layer 102 through the other side surface SS6 of the electrode assembly 500 opposite to the one side surface SS5 of the electrode assembly 500. The lithium battery 1000 may include the electrode assembly 500. Because the positive electrode tab Ta and the negative electrode tab Tb are provided on side surfaces opposite to each other, a possibility of a short circuit between the positive electrode tab Ta and the negative electrode tab Tb may be reduced.

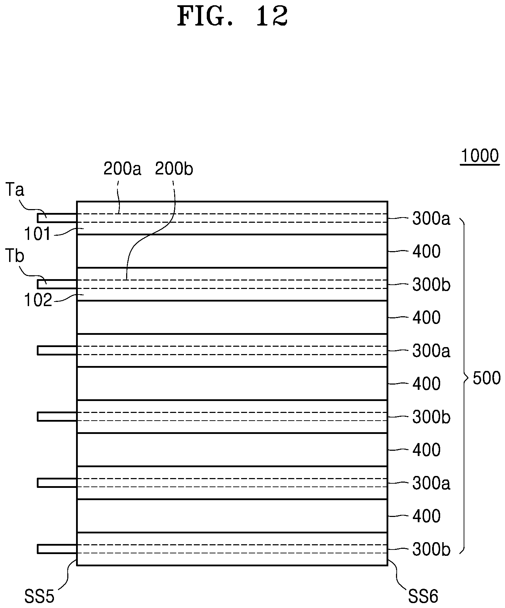

Referring to FIG. 12, the electrode assembly 500 may include a plurality of positive electrodes 300a stacked in a thickness direction, a plurality of negative electrodes 300b provided between the plurality of positive electrodes 300a, and a plurality of electrolytes 400 provided between the plurality of positive electrodes 300a and the plurality of negative electrodes 300b. The positive electrode 300a may include a positive electrode current collector 200a, the positive electrode current collector 200a may include a positive electrode tab Ta extending to the outside of a positive electrode active material layer 101 through one side surface SS5 of the electrode assembly 500, the negative electrode 300b may include a negative electrode current collector 200b, and the negative electrode current collector 200b may include a negative electrode tab Tb extending to the outside of a negative electrode active material layer 102 through the same one side surface SS5 of the electrode assembly 500. The lithium battery 1000 may include the electrode assembly 500.

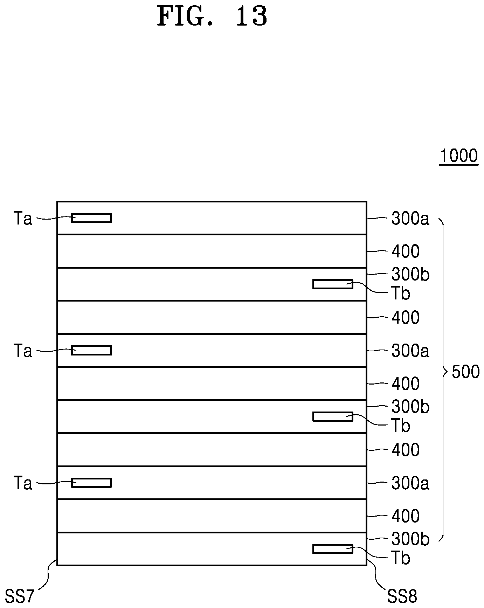

Referring to FIG. 13, a plurality of positive electrode tabs Ta may be provided on one side surface SS5 to be spaced and/or apart from each other by certain intervals in a thickness direction, and a plurality of negative electrode tabs Tb may be provided on the one side surface SS5 to be spaced and/or apart from each other by certain intervals in the thickness direction. The plurality of positive electrode tabs Ta may be provided adjacent to one side surface SS7 of the electrode assembly 500 in a transverse direction, and the plurality of negative electrode tabs Tb may be provided adjacent to the other side surface SS8 of the electrode assembly 500 in the transverse direction. FIG. 13 is a front view of one side surface SS5 of FIG. 12. The lithium battery 1000 may include the electrode assembly 500.

Although the positive electrode tab Ta and the negative electrode tab Tb are provided on the same side surface, because the positive electrode tab Ta and the negative electrode tab Tb are spaced and/or apart from each other in the transverse direction, a possibility of a short circuit between the positive electrode tab Ta and the negative electrode tab Tb may be reduced.

The lithium battery 1000 may include, for example, a lithium primary battery or a lithium secondary battery. The lithium battery 1000 may include, for example, a lithium ion battery, a lithium solid battery, and a lithium air battery.

An electrolyte included in the lithium battery 1000 may be, for example, a liquid electrolyte or a solid electrolyte. The solid electrolyte may be, for example, an oxide-based solid electrolyte or a sulfide-based solid electrolyte.

A method of preparing an electrode according to another embodiment is provided.

The method of preparing an electrode may include providing an electrode current collector; and providing a dry electrode film 150 on one surface or two (e.g., opposite) surfaces of the electrode current collector.

First, the electrode current collector is provided. The electrode current collector may additionally include a coating layer provided on one surface or two (e.g., opposite) surfaces of the electrode current collector. The providing of the electrode current collector may additionally include, for example, arranging the coating layer on one surface or two (e.g., opposite) surfaces of the electrode current collector. For a material of the electrode current collector, a section of the described electrode current collector is referred to. A positive electrode current collector may be, for example, an aluminium foil. A negative electrode current collector may be, for example, a copper foil. In the arranging of the coating layer on one surface or two opposite surfaces of the electrode current collector, the coating layer may be provided on one surface or two opposite surfaces of the electrode current collector in a dry or wet type or kind. For a specific coating method, a section of portion of the electrode current collector including the described coating layer is referred to.

Next, the dry electrode film 150 may be provided on one surface or two (e.g., opposite) surfaces of the electrode current collector to prepare an electrode. For example, the electrode may be prepared in a manner of laminating the dry electrode film 150 on the electrode current collector.

The electrode prepared through the described method of preparing an electrode may include an electrode current collector, and an electrode active material layer provided on one surface or two (e.g., opposite) surfaces of the electrode current collector, wherein the electrode active material layer includes the dry electrode film 150.

For example, a lithium battery may be manufactured through an example method, but one or more embodiments are not necessarily limited thereto. A method may vary according to required conditions.

First, both (e.g., simultaneously) a positive electrode and a negative electrode may be prepared according to the described dry electrode film 150 and a method of preparing an electrode. Alternatively, one electrode of the positive electrode and the negative electrode may be prepared through such a dry manufacturing method, and the other electrode may be prepared through a wet manufacturing method. For example, the other electrode may be prepared by preparing an electrode slurry including an electrode active material, a conductive material, a binder, and a solvent, and applying the prepared electrode slurry on an electrode current collector, and drying the electrode slurry. A conductive material and a binder included in an electrode prepared in a wet type or kind may be selected from the conductive material and the binder utilized in preparing such a dry electrode.

Next, a separator to be inserted between the positive electrode and the negative electrode is prepared.

As the separator, any separator commonly utilized in a lithium battery may be utilized. For example, a separator having low resistance to the movement of ions in an electrolyte and an excellent or suitable electrolyte impregnation ability may be utilized. For example, the separator may include at least one selected from among a glass fiber, polyester, Teflon, PE, PP, PTFE, and a combination thereof and may be in the form of a nonwoven fabric or a woven fabric. For example, a windable separator including PE, PP, and/or the like may be utilized in a lithium ion battery, and a separator having an excellent or suitable electrolyte impregnation ability may be utilized in a lithium ion polymer battery.

The separator is prepared through the following example method, but one or more embodiments are not necessarily limited to such a method. A method may be adjusted according to required conditions.

First, a polymer resin, a filler, and a solvent are mixed to prepare a separator composition. The separator composition may be applied directly on an electrode and dried to form the separator. In some embodiments, the separator composition may be cast and dried on a support, and then a separator film peeled off from the support may be laminated on the electrode to form the separator.

A polymer utilized for preparing the separator is not particularly limited, and any material utilized in a binding material of an electrode plate may be utilized. For example, the polymer may include a vinylidene fluoride/hexafluoropropylene copolymer, PVDF, polyacrylonitrile, polymethyl methacrylate, or a mixture thereof.

Next, an electrolyte is prepared.

The electrolyte is, for example, an organic electrolyte solution. For example, a lithium salt is dissolved in an organic solvent to prepare the organic electrolyte.

Any material may be utilized as long as the material is utilized as an organic solvent in the art. Examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, a dimethyl ether, or a mixture thereof.

Any material may be utilized as long as the material is utilized as a lithium salt in the art. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are each a natural number), LiCl, Lil, or a mixture thereof.

In some embodiments, the electrolyte may be, for example, a solid electrolyte. The solid electrolyte may be, for example, boron oxide, lithium oxynitride, and/or the like, but one or more embodiments are not limited thereto. Any material may be utilized as long as the material is utilized as a solid electrolyte in the art. The solid electrolyte may be formed on the negative electrode through, for example, sputtering, or a separate solid electrolyte sheet may be stacked on the negative electrode. The solid electrolyte may be, for example, an oxide-based solid electrolyte or a sulfide-based solid electrolyte.

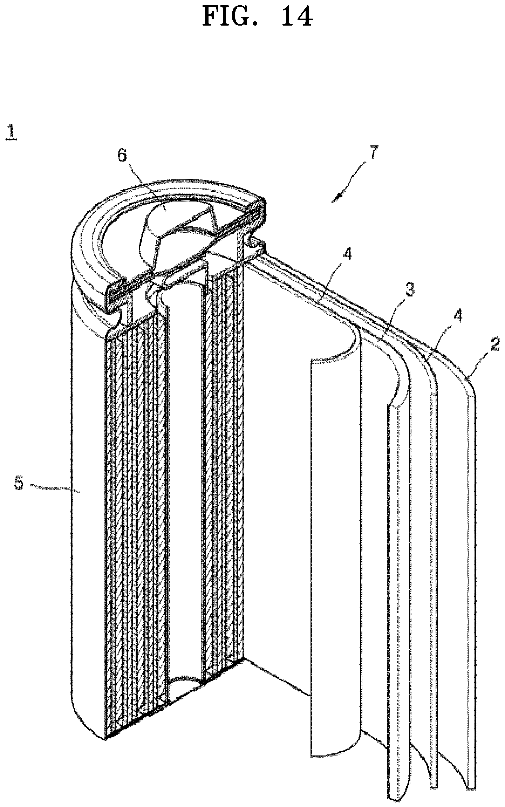

Referring to FIG. 14, a lithium battery 1 according to one or more embodiments may include a positive electrode 3, a negative electrode 2, and a separator 4. The positive electrode 3, the negative electrode 2, and the separator 4 may be wound or folded to form a battery structure 7. The formed battery structure 7 may be accommodated in a battery case 5. An organic electrolyte may be injected into the battery case 5, and the battery case 5 may be sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, and/or the like.

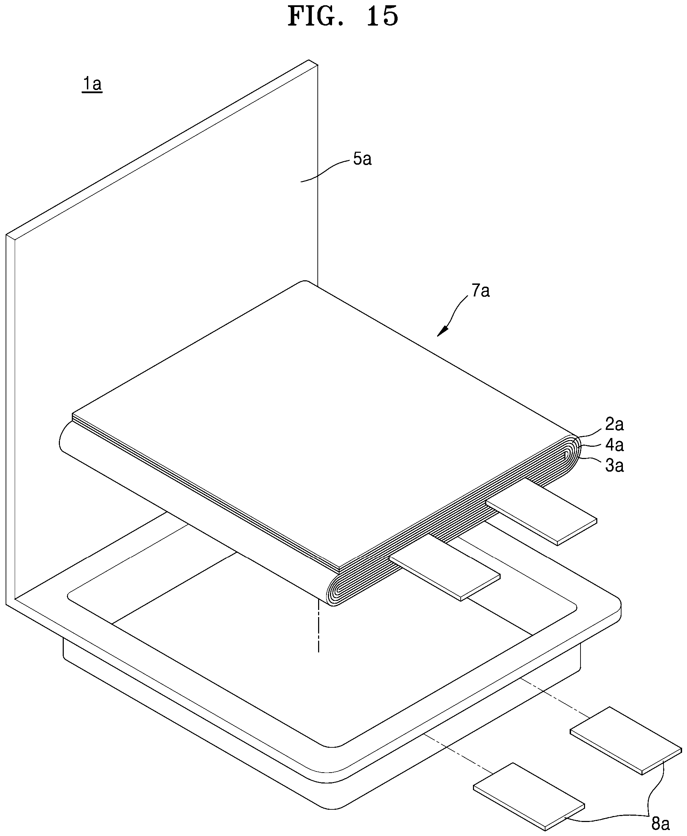

Referring to FIG. 15, a lithium battery 1a according to one or more embodiments may include a positive electrode 3a, a negative electrode 2a, and a separator 4a. The separator 4a may be provided between the positive electrode 3a and the negative electrode 2a, and the positive electrode 3a, the negative electrode 2a, and the separator 4a may be wound or folded to form a battery structure 7a. The formed battery structure 7a may be accommodated in a battery case 5a. The lithium battery 1a may include an electrode tab 8a serving as an electrical path for guiding a current formed in the battery structure 7a to the outside. An organic electrolyte may be injected into the battery case 5a, and the battery case 5a may be sealed to complete the lithium battery 1a. The battery case 5a may have a prismatic shape, but one or more embodiments are not necessarily limited to such a shape. For example, the battery case 5a may have a cylindrical shape, a thin film shape, and/or the like.

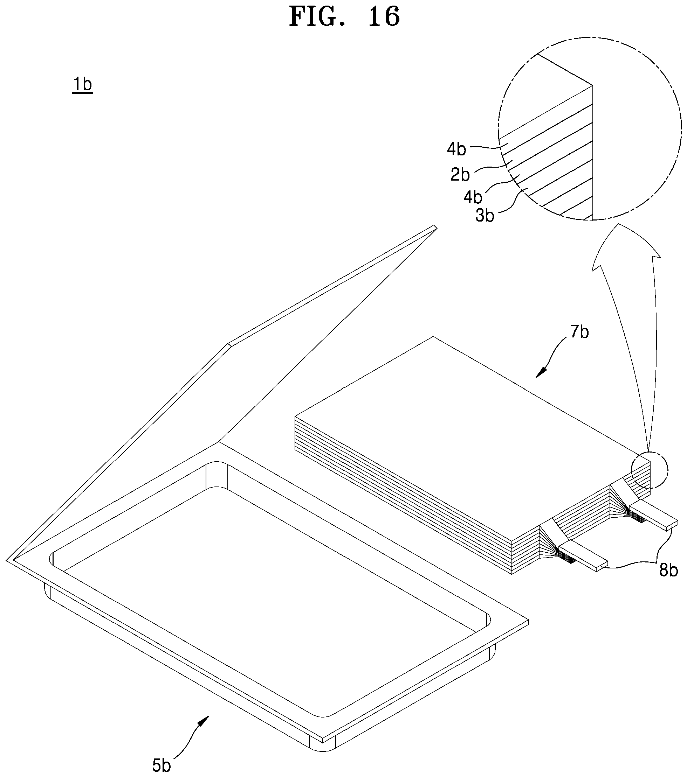

Referring to FIG. 16, a lithium battery 1 b according to one or more embodiments may include a positive electrode 3b, a negative electrode 2b, and a separator 4b. The separator 4b may be provided between the positive electrode 3b and the negative electrode 2b to form a battery structure 7b. The battery structure 7b may be stacked in a bi-cell structure and then accommodated in a battery case 5b. The lithium battery 1b may include an electrode tab 8b serving as an electrical passage for guiding a current formed in the battery structure 7b to the outside. An organic electrolyte may be injected into the battery case 5b, and the battery case 5b may be sealed to complete the lithium battery 1b. The battery case 5b may have a prismatic shape, but one or more embodiments are not necessarily limited to such a shape. For example, the battery case 5b may have a cylindrical shape, a thin film shape, and/or the like.

A pouch-type or kind lithium battery corresponds to a case in which a pouch is utilized as a battery case in the lithium batteries of FIGS. 14 to 16. The pouch-type or kind lithium battery may include one or more battery structures. A separator may be provided between a positive electrode and a negative electrode to form the battery structure. After the battery structure is stacked in a bi-cell structure, the battery structure may be impregnated in an organic electrolyte, accommodated in a pouch, and sealed to complete the pouch-type or kind lithium battery. For example, although not shown in the drawing, the described positive electrode, negative electrode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

A lithium battery may have excellent or suitable lifespan characteristics and relatively high rate characteristics and thus may be utilized, for example, in electric vehicles (EVs). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptop computers, smartphones, electric vehicles, and/or the like. A battery module may include, for example, a plurality of batteries and a frame for holding the plurality of batteries. A battery pack may include, for example, a plurality of battery modules and a bus bar for connecting the plurality of battery modules. The battery module and/or the battery pack may further include a cooling device. A plurality of battery packs may be controlled or selected by a battery management system. The battery management system may include a battery pack and a battery controller connected to the battery pack.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, the disclosure will be described in more detail with reference to the following Examples and Comparative Examples. However, Examples are for illustrative purposes only and are not intended to limit the scope of the disclosure.

### EXAMPLES

### Manufacturing of lithium battery (half-cell)

### Example 1: Second dry binder particle with diameter of 15 µm, second dry binder particle content (e.g., amount) of 2 wt%

### Preparation of second dry binder particles

First dry binder particles of PTFE having an average particle diameter of 500 micrometer (µm) were prepared. The first dry binder particles were stored in a freezer at a temperature of -18 °C for 24 hours to prepare frozen first dry binder particles. The frozen first dry binder particles were put into a blade pulverizer at a temperature of -18 °C and pulverized for 3 minutes in an air atmosphere to prepare second dry binder particles having an average particle diameter of 15 µm. The average particle diameter was obtained by measuring diameters of a plurality of dry binder particles present in a certain region of an SEM image through software and calculating an average value thereof.

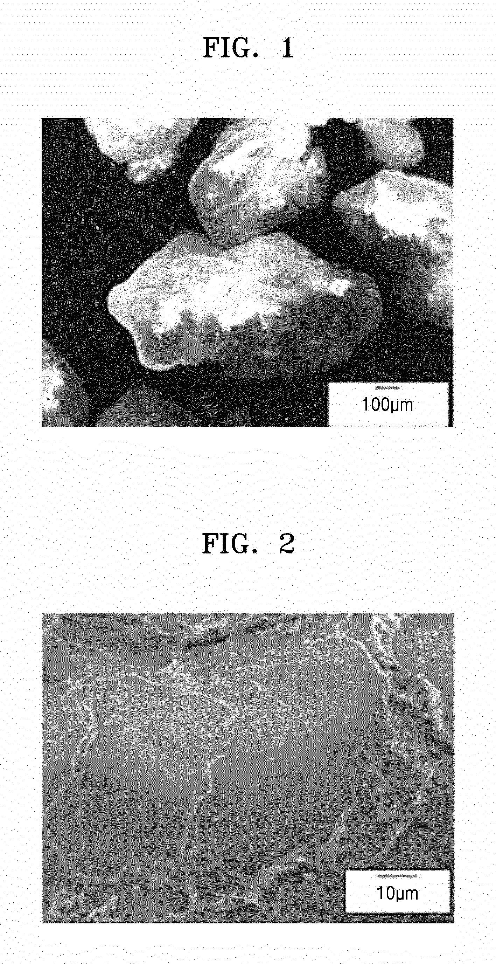

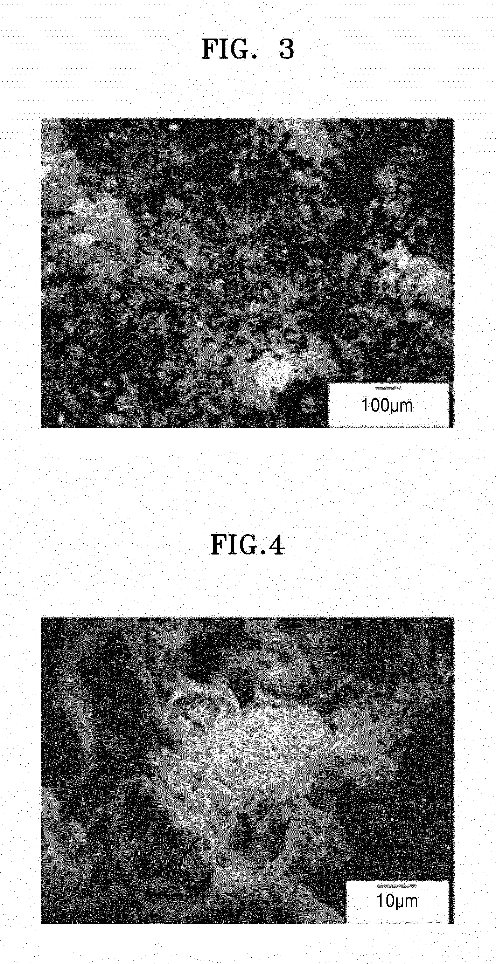

FIGS. 1 and 2 are SEM images of the frozen first dry binder particles. FIG. 2 is an enlarged image of FIG. 1. FIGS. 3 and 4 are SEM images of the second dry binder particles. FIG. 4 is an enlarged image of FIG. 3.

As shown in FIGS. 1 to 4, the particle diameter of the second dry binder particles was considerably reduced as compared with the particle diameter of the first dry binder particles.

### Preparation of dry positive electrode film

LiNi_{0.91}Co_{0.05}Al_{0.04}O₂ (hereinafter referred to as NCA91) as a dry positive electrode active material, a carbon conductive material (Denka black) as a dry conductive material, and the second dry binder particles as a dry binder were put into a blade mixer in a weight ratio of 96:2:2 and then primarily dry-mixed at a speed of 900 rpm at a temperature of 25 °C for 10 minutes to prepare a first dry mixture in which the positive electrode active material, the dry conductive material, and the dry binder were uniformly mixed. Subsequently, in order for the second dry binder particles to be fibrillized, the first dry mixture was additionally secondarily mixed at a speed of 4,800 rpm at a temperature of 25 °C for 20 minutes to prepare a second dry mixture. A separate solvent was not utilized during the preparation of the first dry mixture and the second dry mixture.

As shown in FIG. 6, the second dry mixture was put between a pair of calender rolls of a rolling device and calendered to prepare a dry positive electrode film. The dry positive electrode film included a dry binder fibrillized in a machine direction MD. The dry positive electrode film was a self-standing film without a support. Preparation of dry positive electrode

A positive electrode current collector, in which a carbon layer as a coating layer was provided on one surface of an aluminium thin film having a thickness of 12 µm, was prepared. The coating layer may be regarded as an interlayer.

A composition including a carbon conductive material (Denka black) and PVDF was applied on an aluminium thin film and then dried to prepare the carbon layer. A thickness of the carbon layer provided on one surface of the aluminium thin film was about 1 µm.

The dry positive electrode film was provided on one surface of the positive electrode current collector on which the carbon layer was provided to prepare a positive electrode in which an interlayer and a positive electrode active material layer were sequentially provided on the positive electrode current collector. A thickness of the positive electrode active material layer was about 100 µm.

### Manufacturing of lithium battery

By utilizing the positive electrode prepared above, a lithium metal was utilized as a counter electrode, and a solution, in which a PTFE separator and 1.3 M LiPF₆ were dissolved in a mixed solvent of ethylene carbonate (EC), ethyl methyl carbonate (EMC), and dimethyl carbonate (DMC) (volume ratio of 3:4:3), was utilized as an electrolyte to manufacture a coin cell.

### Example 2: Second dry binder with particle diameter of 20 µm, second dry binder particle content (e.g., amount) of 2 wt%

A dry positive electrode film, a dry positive electrode, and a lithium battery were manufactured in substantially the same manner as in Example 1, except that pulverizing conditions of frozen first dry binder particles were changed to change a particle diameter of second dry binder particles to about 20 µm.

### Example 3: Second dry binder particle with diameter of 35 µm, second dry binder particle content (e.g., amount) of 2 wt%

A dry positive electrode film, a dry positive electrode, and a lithium battery were manufactured in substantially the same manner as in Example 1, except that pulverizing conditions of frozen first dry binder particles were changed to change a particle diameter of second dry binder particles to 35 µm.

### Example 4: Second dry binder particle with diameter of 100 µm, second dry binder particle content (e.g., amount) of 2 wt%

A dry positive electrode film, a dry positive electrode, and a lithium battery were manufactured in substantially the same manner as in Example 1, except that pulverizing conditions of frozen first dry binder particles were changed to change a particle diameter of second dry binder particles to 100 µm.

### Comparative Example 1: First dry binder particle with diameter of 500 µm, second dry binder particle content (e.g., amount) of 2 wt%

A dry positive electrode film, a dry positive electrode, and a lithium battery were prepared in substantially the same manner as in Example 1, except that first dry binder particles that were not pulverized were utilized without any change instead of second dry binder particles.

### Comparative Example 2: Wet positive electrode

### Preparation of wet positive electrode

A mixture, in which LiNi_{0.91}Co_{0.05}Al_{0.04}O₂ (hereinafter referred to as NCA91) as a positive electrode active material, a carbon conductive material (Denka black) as a conductive material, and PTFE as a binder were mixed in a weight ratio of 96:1.8:2.2, was mixed with NMP in a mortar and pestle to prepare a slurry for forming a positive electrode active material layer. The slurry was applied on one surface of an aluminium foil positive electrode current collector having a thickness of 12 µm through bar coating, dried at room temperature, and then dried again under conditions of vacuum and a temperature 120 °C to introduce a wet positive electrode active material layer, thereby preparing a stack. The prepared stack was rolled to prepare a wet positive electrode. Pressure during rolling was 3.0 ton/cm². A thickness of the wet positive electrode active material layer of the wet positive electrode of Comparative Example 2 was equal to a thickness of the dry positive electrode active material layer of the dry positive electrode of Example 1.

### Manufacturing of coin cell

A lithium battery was manufactured in substantially the same manner as in Example 1, except that the wet positive electrode prepared above was utilized.

### Reference Example 1: Dry positive electrode free of interlayer

### Preparation of dry positive electrode

A dry positive electrode was prepared in substantially the same manner as in Example 1, except that an aluminium thin film having a thickness of 12 µm without a carbon layer as an interlayer was utilized as a positive electrode current collector.

A dry positive electrode active material layer was partially peeled off from an aluminium foil.

### Manufacturing of coin cell

Because the dry positive electrode active material layer was present in a state of being peeled off from the positive electrode current collector, manufacturing of a coin cell was not proceeded.

### Evaluation Example 1: Evaluation of degree of crystallinity

XRD spectra were measured on the second dry binder particles of PTFE utilized in Examples 1 to 4 and the first dry binder particles of PTFE utilized in Comparative Example 1.

The XRD spectrum was measured through X'Pert Pro, PANalytical^{®} utilizing Cu Kα radiation (1.54056 Å).

In the XRD spectrum of the dry binder particles, at a diffraction angle 2θ of 13.0° to 20.0°, a sharp (100) crystalline peak appeared at a diffraction angle 2θ of 18°±1.5°, and a broad amorphous peak appeared at a diffraction angle 2θ of 16.5°±3.0° at a left side of the (100) crystalline peak. Through deconvolution of an entire peak at the diffraction angle 2θ of 13.0° to 20.0°, an area of the sharp (100) crystalline peak at the diffraction angle 2θ of 18°±1.5° and an area of the broader peak at the diffraction angle 2θ of 16.5°±3.0° were each derived. As shown in Experimental equation 1, a degree of crystallinity was calculated from a ratio of the area of the sharp (100) crystalline peak to the total area of the sharp (100) crystalline peak and the broad amorphous peak. Measurement results are shown in Table 1. degree of crystallinity (%) = (area of sharp (100) crystalline peak at 2θ of 18°±1.5°)/[sharp (100) crystalline peak area at 2θ of 18°±1.5° + area of broad amorphous peak at 2θ of 16°±3.0°] × 100

**Table 1**

| | Degree of crystallinity [%] |
|---|---|
| Example 1 | 88 |
| Example 2 | 85 |
| Example 3 | 80 |
| Example 4 | 60 |
| Comparative Example 1 | 42 |

As shown in Table 1, a degree of crystallinity of the second dry binder particles of PTFE of Examples 1 to 4 was in a range of 60 % to 88 %.

In contrast, a degree of crystallinity of the first dry binder particles of PTFE of Comparative Example 1 deviated from the described range.

Evaluation Example 2: Measurement of tensile strength at break and elongation at break

In a stress-strain curve obtained by stretching each of samples of the dry positive electrode films prepared in Examples 1 to 4 and a sample of the dry positive electrode film prepared in Comparative Example 1 at a speed of 5 millimeter per minute (mm/min) in a machine direction MD utilizing a texture analyzer (TA.XT plus manufactured by Stable Micro Systems), tensile strength at break TSB which was stress at break of the sample, and elongation at break EB which was the elongation at break of the sample were each measured. Measurement results are shown in Table 2 and Table 3. The sample of the dry positive electrode film utilized for evaluation of physical properties had 20 mm (length) × 10 mm (width) × 0.12 mm (thickness). The dry positive electrode film prepared in Comparative Example 1 had first elongation at break EB1 and first tensile strength at break TSB1 because the dry positive electrode film was prepared utilizing the dry electrode mixture including the first dry binder particles.

The dry positive electrode films prepared in Examples 1 to 4 had second elongation at break EB2 and second tensile strength at break TSB2 because the dry positive electrode films were prepared utilizing the dry electrode mixture including the second dry binder particles.

**Table 2**

| | Elongation at break [%] | Tensile strength at break [N/mm²] |
|---|---|---|
| Example 1 | 25.20 | 1.058 |
| Example 2 | 24.59 | 1.027 |
| Example 3 | 21.11 | 1.004 |
| Example 4 | 18.9 | 0.73 |
| Comparative Example 1 | 13.4 | 0.49 |

**Table 3**

| | Second elongation at break/first elongation at break (EB2/EB1) | Second tensile strength at break/first tensile strength at break (TSB2/TSB1) |
|---|---|---|
| Example 1 | 1.89 | 2.14 |
| Example 2 | 1.84 | 2.08 |
| Example 3 | 1.58 | 2.03 |
| Example 4 | 1.41 | 1.47 |
| Comparative Example 1 | 1 | 1 |

As shown in Tables 2 and 3, the mechanical properties of the dry electrode films of Examples 1 to 4 were improved as compared with the dry electrode film of Comparative Example 1.

The dry electrode films of Examples 1 to 4 were not easily broken while having higher strength than the dry electrode film of Comparative Example 1.

For example, because the dry electrode films of Examples 1 to 4 utilized the pulverized second dry binder particles, the dry binder particles were more easily and considerably fibrillized as compared with the dry electrode film of Comparative Example 1 utilizing the unpulverized first dry binder particles, and thus a fibrillized binder more firmly bound a dry electrode active material.

### Evaluation Example 3: Evaluation of vertical binding force of positive electrode active material layer (I)

By utilizing SAICAS (SAICAS EN-EX manufactured by Dipla Wintes Co., Ltd., in JAPAN), binding characteristics of the positive electrode active material layers included in the dry positive electrode of Example 1 and the wet positive electrode of Comparative Example 2 were analyzed.

By utilizing a diamond blade with a width of 1 mm, under conditions of a clearance angle of 10°, a rake angle of 20°, a shear angle of 45°, a horizontal velocity of 4 micrometer per second (µm/s), and a vertical velocity of 0.4 µm/s, a constant velocity analysis was performed to measure a vertical binding force Fv according to a depth.

First, a first constant velocity analysis was performed from a first position on a surface of the positive electrode active material layer to a surface of the positive electrode current collector, and a blade was horizontally moved along the surface of the positive electrode current collector to remove the positive electrode active material layer. Then, at a position of 10 µm behind the first position, a second constant velocity analysis was performed under the same conditions as the first constant velocity analysis. Data measured in the second constant velocity analysis was utilized.

In the positive electrode active material layer, a vertical binding force of the positive electrode active material layer was measured, and measured data was normalized to a binding force graph area to derive a vertical relative binding force F_{VR} of the positive electrode active material layer according to a depth.

The vertical binding force of the positive electrode active material layer is derived utilizing data measured in a section from a first point spaced and/or apart from the surface of the positive electrode active material layer by 5 % of the total thickness of the positive electrode active material layer to a second point spaced and/or apart from the surface of the electrode current collector by 5 % of the total thickness of the positive electrode active material layer. For example, data near the surface of the positive electrode active material layer and data near the surface of the electrode current collector were excluded to prevent or reduce measurement errors.

A change ratio of the vertical relative binding force F_{VR} was calculated utilizing Experimental equation 2 from data about the derived vertical relative binding force F_{VR} of the positive electrode active material layer. In some embodiments, an arithmetic average value was also calculated from the data about the derived vertical relative binding force F_{VR} of the positive electrode active material layer. change ratio of vertical relative binding force FVR (%) = [(maximum value of vertical relative binding force - minimum value of vertical relative binding force)/minimum value of vertical relative binding force] × 100

As a result of measurement, the change ratio of the vertical relative binding force of the positive electrode active material layer included in the dry positive electrode of Example 1 was 300 % or less.

Therefore, it was confirmed that the positive electrode active material layer (that is, the dry electrode film) of Example 1 had substantially uniform binding force and composition distribution irrespective of a position of the positive electrode active material layer in a thickness direction.

In contrast, the change ratio of the vertical relative binding force of the positive electrode active material layer included in the wet positive electrode of Comparative Example 2 exceeded 400 %.

Therefore, it was confirmed that the positive electrode active material layer of Comparative Example 2 had considerably changed binding force and composition distribution according to a position of the positive electrode active material layer in a thickness direction.

### Evaluation Example 4: Evaluation of horizontal binding force of positive electrode active material layer (II)

By utilizing SAICAS (SAICAS EN-EX manufactured by Dipla Wintes Co., Ltd., in JAPAN), binding characteristics of the positive electrode active material layers included in the dry positive electrode prepared in Example 1 and the wet positive electrode prepared in Comparative Example 2 were analyzed.

By utilizing a diamond blade with a width of 1 mm, under conditions of a clearance angle of 10°, a rake angle of 20°, a shear angle of 45°, a horizontal velocity of 4 µm/s, and a vertical velocity of 0.4 µm/s, a constant velocity analysis was performed to measure a horizontal binding force F_{H} according to a depth.

First, a first constant velocity analysis was performed from a first position on a surface of the positive electrode active material layer to a surface of the positive electrode current collector, and a blade was horizontally moved along the surface of the positive electrode current collector to remove the positive electrode active material layer. Then, at a position of 10 µm behind the first position, a second constant velocity analysis was performed under the same conditions as the first constant velocity analysis. Data measured in the second constant velocity analysis was utilized.

A first horizontal binding force F_{H1} at a first point spaced and/or apart from the surface of the positive electrode active material layer by 10 % of the total thickness of the positive electrode active material layer and a second horizontal binding force F_{H2} at a second point spaced and/or apart from the surface of the electrode current collector by 10 % of the total thickness of the positive electrode active material layer were measured.

A horizontal binding force ratio between the first point and the second point is defined by Experimental equation 3. horizontal binding force ratio (%) between first and second point = [FH2/FH1] x 100

As a result of measurement, the horizontal binding force ratio of the positive electrode active material layer of Example 1 was 60 % or more.

In contrast, the horizontal binding force ratio of the positive electrode active material layer of Comparative Example 2 was less than 50 %.

For example, the horizontal binding force ratio of the positive electrode active material layer of Example 1 was increased as compared with the positive electrode active material layer of Comparative Example 2.

Therefore, it was confirmed that the positive electrode active material layer (that is, the dry electrode film) of Example 1 had more substantially uniform binding force and composition distribution than the positive electrode active material layer of Comparative Example 2.

### Evaluation Example 5: Evaluation of charge/discharge characteristics at room temperature

The lithium batteries manufactured in Examples 1 to 4 and Comparative Example 1 were charged at a constant current rate of 0.1 C at a temperature of 25 °C until a voltage reached 4.4 V (vs. Li), and then, in a constant voltage mode, while 4.4 V was maintained, the charging was cut off at a current rate of 0.05 C. Subsequently, the lithium secondary batteries were discharged at a constant current rate of 0.1 C until the voltage reached 2.8 V (vs. Li) during discharging (formation cycle).

The lithium batteries subjected to the formation cycle were charged at a constant current rate of 0.5 C at a temperature of 25 °C until the voltage reached 4.4 V (vs. Li). Subsequently, the lithium secondary batteries were discharged at a constant current rate of 0.5 C until the voltage reached 2.8 V (vs. Li) during discharging. Such a cycle was repeated up to a 100^{th} cycle (100 times).

The lithium batteries were rested for 10 minutes after every charging/discharging cycle. Some of charging/discharging test results at room temperature are shown in Table 4. A capacity retention ratio at a 100^{th} cycle is defined by Experimental equation 4. capacity retention ratio (%) = [discharge capacity at 100th cycle/discharge capacity at 1st cycle] × 100

**Table 4**

| | Capacity retention ratio [%] |
|---|---|
| Example 1 | 95 |
| Example 2 | 95 |
| Example 3 | 93 |
| Example 4 | 90 |
| Comparative Example 1 | 88 |

As shown in Table 4, the lifespan characteristics at room temperature of the lithium batteries of Examples 1 to 4 were improved as compared with the lithium battery of Comparative Example 1.

In the lithium battery of Comparative Example 1, because a content (e.g., amount) of the dry binder decreased, the mechanical properties of the dry positive electrode deteriorated. It was determined that the lifespan characteristics of the lithium battery were deteriorated because such a dry positive electrode was easily deteriorated due to a volume change during charging/discharging.

In contrast, in the lithium batteries of Examples 1 to 4, despite a decrease in content (e.g., amount) of the dry binder, the mechanical properties of the dry electrode were excellent or suitable. It was determined that the lifespan characteristics of the lithium battery were improved because such a dry electrode was not easily deteriorated due to a volume change during charging/discharging.

According to an aspect, by utilizing binder particles obtained by being frozen and pulverized and having a reduced particle diameter, a dry electrode film having improved mechanical properties may be easily prepared.

In some embodiments, a dry electrode film having excellent or suitable mechanical properties at a reduced binder content (e.g., amount) may be easily prepared.

Also, because a dry electrode film have a reduced binder content (e.g., amount), the energy density of the dry electrode film may be improved.

In some embodiments, because a dry electrode includes a dry electrode film having improved mechanical properties, the deterioration of the dry electrode during charging/discharging may be suppressed or reduced.

In some embodiments, because a lithium battery includes a dry electrode film having improved mechanical properties, the cycle characteristics of the lithium battery may be improved.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the disclosure as defined by the following claims and equivalents thereof.

The present invention may be defined by reference to the following clauses:
Clause 1. A method of preparing a dry electrode film, the method comprising:
   providing frozen first dry binder particles;
   pulverizing the frozen first dry binder particles to prepare second dry binder particles;
   mixing a dry electrode active material and the second dry binder particles to prepare a dry electrode mixture; and
   processing the dry electrode mixture into a dry electrode film comprising a dry binder through a rolling device comprising a calender roll,
   wherein a second particle diameter of the second dry binder particles is less than a first particle diameter of the frozen first dry binder particles.
Clause 2. The method of clause 1, wherein the first particle diameter of the frozen first dry binder particles is 200 µm or more, and the second particle diameter of the second dry binder particles is 100 µm or less.
Clause 3. The method of clause 1 or clause 2, wherein the pulverizing is performed at a temperature of -10 °C or less for about 0.5 minutes to about 10 minutes.
Clause 4. The method of any one of clauses 1 to 3, wherein, in an X-ray diffraction (XRD) spectrum of the second dry binder particles, a degree of crystallinity, which is a ratio of an area of a (100) crystalline peak at a diffraction angle (2θ) of about 18°±1.5° to a total peak area of the (100) crystalline peak at the diffraction angle (2θ) of about 18°±1.5° and an amorphous peak at a diffraction angle (2θ) of about 16.5°±3.0°, is about 50 % to about 90 %.
Clause 5. The method of any one of clauses 1 to 4, wherein the dry electrode mixture further comprises a dry conductive material,
   the dry conductive material comprises a carbon-based conductive material,
   the carbon-based conductive material comprises a fibrous carbon-based material having an aspect ratio of 10 or more, a particulate carbon-based material having an aspect ratio of less than 10, or a combination thereof, and
   a content of the dry conductive material is about 0.1 wt% to about 5 wt% with respect to a total weight of the dry electrode film.
Clause 6. The method of any one of clauses 1 to 5, wherein the dry binder comprises a fibrillized binder or comprises a fluorine-based binder, and
   a glass transition temperature (T_{g}) of the dry binder is about 15 °C to about 150 °C.
Clause 7. The method of any one of clauses 1 to 6, wherein a content of the dry binder is about 0.1 wt% to about 2 wt% with respect to a total weight of the dry electrode film.
Clause 8. The method of any one of clauses 1 to 7, wherein a dry electrode film, which is prepared using a dry electrode mixture which comprises the frozen first dry binder particles, has a first elongation at break (EB1), and
   a dry electrode film, which is prepared using a dry electrode mixture which comprises the second dry binder particles, has a second elongation at break (EB2),
   wherein a ratio (EB2/EB1) of the second elongation at break to the first elongation at break is 1.1 or more.
Clause 9. The method of clause 8, wherein the second elongation at break (EB2) of the dry electrode film is 14 % or more.
Clause 10. The method of any one of clauses 1 to 9, wherein a dry electrode film, which is prepared using a dry electrode mixture which comprises the second dry binder particles, has a first tensile strength at break (TSB1), and
   a dry electrode film, which is prepared using a dry electrode mixture which comprises the second dry binder particles, has a second tensile strength at break (TSB2),
   wherein a ratio (TSB2/TSB1) of the second tensile strength at break to the first tensile strength at break is 1.1 or more.
Clause 11. The method of clause 10, wherein the second tensile strength at break of the dry electrode film is 0.5 newton per square millimeter (N/mm²) or more.
Clause 12. The method of any one of clauses 1 to 11, wherein the dry electrode film is free of a residual process solvent.
Clause 13. The method of any one of clauses 1 to 12, wherein the dry electrode film is a self-standing film.
Clause 14. The method of any one of clauses 1 to 13, wherein the dry electrode active material comprises a lithium transition metal oxide, and
   the lithium transition metal oxide is represented by a formula selected from among Formulas 1 to 8:

   Formula 1 LiₐNiₓCo_{y}M_{z}O_{2-b}A_{b}

   wherein, in Formula 1,
   1.0≤a≤1.2, 0≤b≤0.2, 0.8≤x<1, 0≤y≤0.3, 0<z≤0.3, x+y+z=1,
   M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
   A is F, S, Cl, Br, or a combination thereof,

      Formula 2 LiNiₓCo_{y}Mn_{z}O₂

      Formula 3 LiNiₓCo_{y}Al_{z}O₂

      wherein, in Formula 2 and Formula 3, 0.8≤x≤0.95, 0≤y≤0.2, 0<z≤0.2, and x+y+z=1,

      Formula 4 LiNiₓCo_{y}Mn_{z}Al_{w}O₂

      wherein, in Formula 4, 0.8≤x≤0.95, 0≤y≤0.2, 0<z≤0.2, 0<w≤0.2, and x+y+z+w=1,

      Formula 5 LiₐCOₓM_{y}O_{2-b}A_{b}

      wherein, in Formula 5,
      1.0≤a≤1.2, 0≤b≤0.2, 0.9≤x≤1, 0≤y≤0.1, x+y=1,
      M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
      A is F, S, Cl, Br, or a combination thereof,

         Formula 6 LiₐNiₓMn_{y}M'_{z}O_{2-b}A_{b}

         wherein, in Formula 6,
         1.0≤a≤1.2, 0≤b≤0.2, 0 <x≤0.3, 0.5≤y<1, 0<z≤0.3, x+y+z=1,
         M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
         A is F, S, Cl, Br, or a combination thereof,

            Formula 7 LiₐM1ₓM2_{y}PO_{4-b}X_{b}

            wherein, in Formula 7, 0.90≤a≤1.1, 0≤x≤0.9, 0≤y≤0.5, 0.9<x+y<1.1, 0≤b≤2,
            M1 is chromium (Cr), manganese (Mn), iron (Fe), cobalt (Co), nickel (Ni), copper (Cu), zirconium (Zr), or a combination thereof, and
            M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or combinations thereof, and X is O, F, S, P, or combinations thereof, and

               Formula 8 LiₐM3_{z}PO₄

               wherein, in Formula 8, 0.90≤a≤1.1, 0.9≤z≤1.1, and
               M3 is chromium (Cr), manganese (Mn), iron (Fe), cobalt (Co), nickel (Ni), copper (Cu), zirconium (Zr), or a combination thereof.
Clause 15. A dry electrode film being prepared through the method of preparing a dry electrode film of any one of clauses 1 to 14, wherein
   the dry electrode film is prepared utilizing the second dry binder particles obtained by pulverizing the frozen first dry binder particles,
   in an XRD spectrum of the second dry binder particles, a degree of crystallinity, which is a ratio of an area of a (100) crystalline peak at a diffraction angle (2θ) of about 18°±1.5° to a total peak area at a diffraction angle (2θ) of about 13.5° to about 20°, is about 50 % to about 90 %,
   a binder content of the dry electrode film is about 0.1 wt% to about 2 wt% of a total weight of the dry electrode film,
   elongation at break of the dry electrode film is 14 % or more, and
   the dry electrode film is a self-standing film.
Clause 16. The dry electrode film of clause 15, wherein tensile strength at break of the dry electrode film is 0.50 N/mm² or more.
Clause 17. A dry electrode comprising:
   an electrode current collector; and
   the dry electrode film of clause 15 or clause 16 on at least one surface of the electrode current collector.
Clause 18. The dry electrode of clause 17, wherein the electrode current collector comprises a base film and a metal layer on at least one surface of the base film,
   the base film comprises a polymer, the polymer comprises polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof.
Clause 19. The dry electrode of clause 17 or clause 18, wherein the electrode current collector further comprises: a substrate; and an interlayer between the substrate and the dry electrode film, and
   the interlayer comprises a carbon-based conductive material.
Clause 20. A lithium battery comprising:
   a first electrode; a second electrode; and an electrolyte between the first electrode and the second electrode,
   wherein the first electrode, the second electrode, or a combination thereof is the dry electrode of any one of clauses 17 to 19, and
   the electrolyte comprises a liquid electrolyte, a solid electrolyte, or a combination thereof.

## Claims

1. A method of preparing a dry electrode film, the method comprising:
providing frozen first dry binder particles;
pulverizing the frozen first dry binder particles to prepare second dry binder particles;
mixing a dry electrode active material and the second dry binder particles to prepare a dry electrode mixture; and
processing the dry electrode mixture into a dry electrode film comprising a dry binder through a rolling device comprising a calender roll,
wherein a second particle diameter of the second dry binder particles is less than a first particle diameter of the frozen first dry binder particles.

2. The method as claimed in claim 1, wherein the first particle diameter of the frozen first dry binder particles is 200 µm or more, and the second particle diameter of the second dry binder particles is 100 µm or less.

3. The method as claimed in claim 1 or claim 2, wherein the pulverizing is performed at a temperature of -10 °C or less for about 0.5 minutes to about 10 minutes.

4. The method as claimed in any one of claims 1 to 3, wherein, in an X-ray diffraction (XRD) spectrum of the second dry binder particles, a degree of crystallinity, which is a ratio of an area of a (100) crystalline peak at a diffraction angle (2θ) of about 18°±1.5° to a total peak area of the (100) crystalline peak at the diffraction angle (2θ) of about 18°±1.5° and an amorphous peak at a diffraction angle (2θ) of about 16.5°±3.0°, is about 50 % to about 90 %.

5. The method as claimed in any one of claims 1 to 4, wherein the dry electrode mixture further comprises a dry conductive material,
the dry conductive material comprises a carbon-based conductive material,
the carbon-based conductive material comprises a fibrous carbon-based material having an aspect ratio of 10 or more, a particulate carbon-based material having an aspect ratio of less than 10, or a combination thereof, and
a content of the dry conductive material is about 0.1 wt% to about 5 wt% with respect to a total weight of the dry electrode film.

6. The method as claimed in any one of claims 1 to 5, wherein the dry binder comprises a fibrillized binder or comprises a fluorine-based binder, and/or
a glass transition temperature (T_{g}) of the dry binder is about 15 °C to about 150 °C.

7. The method as claimed in any one of claims 1 to 6, wherein a content of the dry binder is about 0.1 wt% to about 2 wt% with respect to a total weight of the dry electrode film.

8. The method as claimed in any one of claims 1 to 7, wherein a dry electrode film, which is prepared using a dry electrode mixture which comprises the frozen first dry binder particles, has a first elongation at break (EB1), and
a dry electrode film, which is prepared using a dry electrode mixture which comprises the second dry binder particles, has a second elongation at break (EB2),
wherein a ratio (EB2/EB1) of the second elongation at break to the first elongation at break is 1.1 or more;
and/or wherein the second elongation at break (EB2) of the dry electrode film is 14 % or more.

9. The method as claimed in any one of claims 1 to 8, wherein a dry electrode film, which is prepared using a dry electrode mixture which comprises the second dry binder particles, has a first tensile strength at break (TSB1), and
a dry electrode film, which is prepared using a dry electrode mixture which comprises the second dry binder particles, has a second tensile strength at break (TSB2),
wherein a ratio (TSB2/TSB1) of the second tensile strength at break to the first tensile strength at break is 1.1 or more;
and/or wherein the second tensile strength at break of the dry electrode film is 0.5 newton per square millimeter (N/mm²) or more.

10. The method as claimed in any one of claims 1 to 9, wherein:
(i) the dry electrode film is free of a residual process solvent; and/or
(ii) the dry electrode film is a self-standing film; and/or
(iii) the dry electrode active material comprises a lithium transition metal oxide, and
the lithium transition metal oxide is represented by a formula selected from among Formulas 1 to 8:
Formula 1 LiₐNiₓCo_{y}M_{z}O_{2-b}A_{b}
wherein, in Formula 1,
1.0≤a≤1.2, 0≤b≤0.2, 0.8≤x<1, 0≤y≤0.3, 0<z≤0.3, x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,
Formula 2 LiNiₓCo_{y}Mn_{z}O₂
Formula 3 LiNiₓCo_{y}Al_{z}O₂
wherein, in Formula 2 and Formula 3, 0.8≤x≤0.95, 0≤y≤0.2, 0<z≤0.2, and x+y+z=1,
Formula 4 LiNiₓCo_{y}Mn_{z}Al_{w}O₂
wherein, in Formula 4, 0.8≤x≤0.95, 0≤y≤0.2, 0<z≤0.2, 0<w≤0.2, and x+y+z+w=1,
Formula 5 LiₐCoₓM_{y}O_{2-b}A_{b}
wherein, in Formula 5,
1.0≤a≤1.2, 0≤b≤0.2, 0.9≤x≤1, 0≤y≤0.1, x+y=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,
Formula 6 LiₐNiₓMn_{y}M'_{z}O_{2-b}A_{b}
wherein, in Formula 6,
1.0≤a≤1.2, 0≤b≤0.2, 0 <x≤0.3, 0.5≤y<1, 0<z≤0.3, x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,
Formula 7 LiₐM1ₓM2_{y}PO_{4-b}X_{b}
wherein, in Formula 7, 0.90≤a≤1.1, 0≤x≤0.9, 0≤y≤0.5, 0.9<x+y<1.1, 0≤b≤2,
M1 is chromium (Cr), manganese (Mn), iron (Fe), cobalt (Co), nickel (Ni), copper (Cu), zirconium (Zr), or a combination thereof, and
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or combinations thereof, and X is O, F, S, P, or combinations thereof, and
Formula 8 LiₐM3_{z}PO₄
wherein, in Formula 8, 0.90≤a≤1.1, 0.9≤z≤1.1, and
M3 is chromium (Cr), manganese (Mn), iron (Fe), cobalt (Co), nickel (Ni), copper (Cu), zirconium (Zr), or a combination thereof.

11. A dry electrode film being prepared through the method of preparing a dry electrode film as claimed in any one of claims 1 to 10, wherein
the dry electrode film is prepared utilizing the second dry binder particles obtained by pulverizing the frozen first dry binder particles,
in an XRD spectrum of the second dry binder particles, a degree of crystallinity, which is a ratio of an area of a (100) crystalline peak at a diffraction angle (2θ) of about 18°±1.5° to a total peak area at a diffraction angle (2θ) of about 13.5° to about 20°, is about 50 % to about 90 %,
a binder content of the dry electrode film is about 0.1 wt% to about 2 wt% of a total weight of the dry electrode film,
elongation at break of the dry electrode film is 14 % or more, and
the dry electrode film is a self-standing film.

12. The dry electrode film as claimed in claim 11, wherein tensile strength at break of the dry electrode film is 0.50 N/mm² or more.

13. A dry electrode comprising:
an electrode current collector; and
the dry electrode film as claimed in claim 11 or claim 12 on at least one surface of the electrode current collector.

14. The dry electrode as claimed in claim 13, wherein the electrode current collector comprises a base film and a metal layer on at least one surface of the base film,
the base film comprises a polymer, the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof; and/or.
wherein the electrode current collector further comprises: a substrate; and an interlayer between the substrate and the dry electrode film, and
the interlayer comprises a carbon-based conductive material.

15. A lithium battery comprising:
a first electrode; a second electrode; and an electrolyte between the first electrode and the second electrode,
wherein the first electrode, the second electrode, or a combination thereof is the dry electrode as claimed in claim 13 or claim 14, and
the electrolyte comprises a liquid electrolyte, a solid electrolyte, or a combination thereof.
